# EUROPEAN PATENT SPECIFICATION

(11) **EP 3 537 671 B1**
(45) Date of publication and mention of the grant of the patent: **29.05.2024**
(21) Application number: 19153480.9
(22) Date of filing: 27.02.2013
(51) Int. Cl.: H04L 45/00, H04L 45/28

(54) **PROTECTION SWITCHING METHOD AND SYSTEM, AND NODES**
SCHUTZSCHALTUNGSVERFAHREN UND -SYSTEM SOWIE KNOTEN
PROCÉDÉ, SYSTÈME DE COMMUTATION DE PROTECTION ET NOEUDS

(43) Date of publication of application: 11.09.2019
(62) Divisional of application: 17156528.6
(73) Proprietor: HUAWEI TECHNOLOGIES CO., LTD., Shenzhen, Guangdong 518129 (CN)
(72) Inventor: LIN, Yi, Shenzhen, Guangdong 518129, P.R. (CN); ZHANG, Xian, Shenzhen, Guangdong 518129, P.R. (CN)
(74) Representative: Gill Jennings & Every LLP

(56) References cited:
- WO-A1-02/35793
- WO-A2-2004/036800
- CN-A- 102 611 604

## Description

### TECHNICAL FIELD

Embodiments of the present invention relate to the field of communications technologies, and in particular, to a protection switching method and system, and nodes.

### BACKGROUND

In a process of transmitting a service through a communications network, when a working path for transmitting the service encounters a fault, protection switching needs to be performed, that is, the service on the faulty path is switched to a protection path for transmission, so as to ensure reliability of service transmission.

The reliability may be implemented by using different protection and recovery technologies. For example, in 1+1 protection, two paths are provided for transmission of each service on an optical network, a working path for transmitting a service is selected from the two paths according to signal quality of the two paths, and the other path is called a protection path; when the working path encounters a fault, the protection path may be used. Therefore, for the transmission of each service, double optical network bandwidth resources are required, which leads to waste of resources. To improve resource usage, a rerouting technology on a control plane may be used. In the solution, when a working path for transmitting a service encounters a fault, it is only required that a connection of a protection path be established according to pre-configured restoration path information or path information recalculated according to network topology information, and a successfully established protection path is used for transmitting the service. Therefore, the resource usage is relatively high. However, the protection switching efficiency of the rerouting technology on the control plane is relatively low. To reduce time required for protection switching, an SMP (shared mesh protection, Shared Mesh Protection) technology may be used, where SMP allows multiple services (namely, multiple working paths) to share a protection path resource.

In a process of implementing protection switching by using the SMP technology, when a working path encounters a fault, first, whether a protection path resource of each intermediate node on a protection path is available is queried hop by hop from one end node (which is called "a first end node") of the working path to another end node (which is called "a second end node") of the working path. Specifically, the first end node sends a query message to a downstream neighboring node (a first intermediate node) to query whether the protection path resource is available; if the resource is unavailable, the first intermediate node returns a failure message to the first end node; if the protection path resource is available, the first intermediate node sends a query message to a downstream neighboring node (a second intermediate node) of the first intermediate node to query whether the resource is available..., until the second end node receives a query message, which indicates that the end-to-end protection path resource is available; then cross-connections are established hop by hop from the second end node to a first node, where the second end node first establishes a cross-connection, switches a service to the protection path, and then returns a cross-connection establishment message to an upstream neighboring node of the second end node to trigger the upstream neighboring node to establish a cross-connection..., until the first end node receives a cross-connection establishment message returned by the first intermediate node, establishes a cross-connection, and switches the service to the protection path. Then, an entire protection switching process is complete. However, when this solution is used, time required for protection switching is relatively long, and the efficiency is still low.

CN 102611604A discloses a method for implementing SMP (shared mesh protection), in which a swiching request is triggered by a node detecting a fault, and then the switching request is transmitted to downstream nodes hop by hop. Every downsteam node decides to continue to transmit the switching resqust on a designated path or response to the upstream node.
WO 2004/036800 A2 discloses a data communications system with a plurality of nodes connected by a plurality of links, in which a subset of the links and nodes forms a worker path for carrying worker data through the communications system and a further subset of links and nodes provides a protection path for carrying other data in the absence of a fault in the worker path and an alternative path for the worker data in the event of a fault in the worker path. Therein, the alternative path is predetermined by protection means prior to the detection of a fault in the worker path.

WO 2002035793 A1 discloses a method of controlling routing of packets in a communications network, in which packets are routed along a first routing path for a first network address, and routing path is directed to a first access node serving a mobile node using the first network address via a communications link. The packets being destined for the mobile node are progressively forwarded from upstream neighbour nodes to downstream neighbour nodes. A route redirection is performed process to redirect at least part of the first routing path, which is performed by passing a routing update message from a downstream neighbour to a first upstream neighbour. After that, the first upstream neighbour alters its routing directionality in response to the routing update message and passing a routing update message to a second upstream neighbour.

### SUMMARY

Embodiments of the present invention provide a protection switching method and system, and nodes, which can improve resource usage and implement fast protection switching, thereby improving efficiency. The present invention is defined by the method of independent claims 1, 5 and 7 and by the apparatus of independent claim 9, 13 and 15. Additional features of the invention are presented in the dependent claims. In the following, parts of the description and drawing referring to embodiments, which are not covered by the claims are not presented as embodiments of the invention, but as examples useful for understanding the invention.

A first aspect provides a protection switching method, where the method includes: receiving, by an intermediate node, a protection switching request message sent by an upstream neighboring node of the intermediate node, where the protection switching request message includes information about a first protection path, the first protection path includes a first end node, a second end node, and at least one intermediate node, the at least one intermediate node is located between the first end node and the second end node, and the intermediate node is one of the at least one intermediate node; when the intermediate node determines, according to the information about the first protection path, that a protection path resource of the intermediate node is available and that the protection path resource of the intermediate node is idle, sending the protection switching request message to a downstream neighboring node of the intermediate node, and sending a first indication message to the upstream neighboring node of the intermediate node, where the first indication message is used to inform the upstream neighboring node of the intermediate node that the protection path resource of the intermediate node is available; and receiving, by the intermediate node, a second indication message that is sent by the downstream neighboring node of the intermediate node according to the protection switching request message, learning, according to the second indication message, that a protection path resource of the downstream neighboring node of the intermediate node is available, and establishing a cross-connection of the first protection path on the intermediate node.

With reference to the first aspect, in a first possible implementation manner, the determining that a protection path resource of the intermediate node is available may specifically be: when the protection path resource of the intermediate node is idle, determining that the protection path resource of the intermediate node is available; or, when a priority of the first protection path is higher than a priority of a second protection path, determining that the protection path resource of the intermediate node is available, where the second protection path includes a third end node, a fourth end node, and at least one intermediate node, and the intermediate node has established a cross-connection of the second protection path on the intermediate node or the intermediate node receives a protection switching request message of the second protection path.

With reference to the first possible implementation manner of the first aspect, in a second possible implementation manner, the priority of the first protection path is higher than the priority of the second protection path, the intermediate node has established the cross-connection of the second protection path on the intermediate node, and the method may specifically be: removing, by the intermediate node, the current cross-connection of the second protection path on the intermediate node so that the protection path resource of the intermediate node is idle.

With reference to the first aspect, or the first possible implementation manner or the second possible implementation manner of the first aspect, in a third possible implementation manner, that the intermediate node determines, according to the information about the first protection path, that a protection path resource of the intermediate node is available may specifically be: determining, by the intermediate node according to the information about the first protection path and configuration information of the intermediate node, that the protection path resource of the intermediate node is available, where the configuration information of the intermediate node includes an identifier of at least one protection path, a priority of the at least one protection path, and information about a protection path resource of the at least one protection path, and the at least one protection path includes the first protection path.

With reference to the third possible implementation manner of the first aspect, in a fourth possible implementation manner, the method may specifically be: changing, by the intermediate node, the configuration information of the intermediate node.

With reference to the first aspect, or any one manner of the first possible implementation manner to the fourth possible implementation manner of the first aspect, in a fifth possible implementation manner, the sending the protection switching request message to a downstream neighboring node of the intermediate node, and sending a first indication message to the upstream neighboring node of the intermediate node may specifically be: sending, by the intermediate node, the protection switching request message to the downstream neighboring node of the intermediate node by using an overhead byte on an optical network, and sending the first indication message to the upstream neighboring node of the intermediate node by using an overhead byte on the optical network.

A second aspect provides a protection switching method, where the method includes: receiving, by an intermediate node, a protection switching request message sent by an upstream neighboring node of the intermediate node, where the protection switching request message includes information about a first protection path, the first protection path includes a first end node, a second end node, and at least one intermediate node, the at least one intermediate node is located between the first end node and the second end node, and the intermediate node is one of the at least one intermediate node; when the intermediate node determines, according to the information about the first protection path, that a protection path resource of the intermediate node is available and the intermediate node has established a cross-connection of the first protection path on the intermediate node, sending the protection switching request message to a downstream neighboring node of the intermediate node; and receiving, by the intermediate node, a second indication message that is sent by the downstream neighboring node of the intermediate node according to the protection switching request message, learning, according to the second indication message, that a protection path resource of the downstream neighboring node of the intermediate node is available, and sending a first indication message to the upstream neighboring node of the intermediate node, where the first indication message is used to inform the upstream neighboring node of the intermediate node that the protection path resource of the downstream neighboring node of the intermediate node is available.

With reference to the second aspect, in a first possible implementation manner, the determining that a protection path resource of the intermediate node is available and the intermediate node has established a cross-connection of the first protection path on the intermediate node may specifically be: when a priority of the first protection path is higher than a priority of a second protection path, determining that the protection path resource of the intermediate node is available, where the second protection path includes a third end node, a fourth end node, and at least one intermediate node, the intermediate node has established a cross-connection of the second protection path on the intermediate node, and the intermediate node is a shared connection resource of the first protection path and the second protection path, where the shared connection resource indicates that protection path resources of links between the intermediate node and two neighboring nodes are the same on the first protection path and the second protection path.

With reference to the second aspect, or the first possible implementation manner of the second aspect, in a second possible implementation manner, that the intermediate node determines, according to the information about the first protection path, that a protection path resource of the intermediate node is available may specifically be: determining, by the intermediate node according to the information about the first protection path and configuration information of the intermediate node, that the protection path resource of the intermediate node is available, where the configuration information of the intermediate node includes an identifier of at least one protection path, a priority of the at least one protection path, and information about a protection path resource of the at least one protection path, and the at least one protection path includes the first protection path.

With reference to the second possible implementation manner of the second aspect, in a third possible implementation manner, the method may specifically be: changing, by the intermediate node, the configuration information of the intermediate node.

With reference to the second aspect, or any one manner of the first possible implementation manner to the third possible implementation manner of the second aspect, in a fourth possible implementation manner, the sending the protection switching request message to a downstream neighboring node of the intermediate node may specifically be: sending the protection switching request message to the downstream neighboring node of the intermediate node by using an overhead byte on an optical network; and the sending a first indication message to the upstream neighboring node of the intermediate node may specifically be: sending the first indication message to the upstream neighboring node by using an overhead byte on the optical network.

A third aspect provides a protection switching method, where the method includes: sending, by a first end node, a protection switching request message to a downstream neighboring node of the first end node, where the protection switching request message includes information about a first protection path, the first protection path includes the first end node, a second end node, and at least one intermediate node, the at least one intermediate node is located between the first end node and the second end node, and the downstream neighboring node of the first end node is a node of the at least one intermediate node; receiving, by the first end node, an indication message that is sent by the downstream neighboring node of the first end node according to the information about the first protection path; and learning, by the first end node according to the indication message, that a protection path resource of the downstream neighboring node of the first end node is available, and establishing a cross-connection of the first protection path on the first end node.

With reference to the third aspect, in a first possible implementation manner, the sending, by a first end node, a protection switching request message to a downstream neighboring node of the first end node may specifically be: sending, by the first end node, the protection switching request message to the downstream neighboring node of the first end node by using an overhead byte on an optical network.

A fourth aspect provides a protection switching method, where the method includes: receiving, by a second end node, a protection switching request message sent by an upstream neighboring node of the second end node, where the protection switching request message includes information about a first protection path, the first protection path includes a first end node, the second end node, and at least one intermediate node, the at least one intermediate node is located between the first end node and the second end node, and the upstream neighboring node of the second end node is a node of the at least one intermediate node; and when determining, according to the information about the first protection path, that a protection path resource of the second end node is available, sending, by the second end node, an indication message to the upstream neighboring node of the second end node, and establishing a cross-connection of the first protection path on the second end node, where the indication message is used to inform the upstream neighboring node of the second end node that the protection path resource of the second end node is available.

With reference to the fourth aspect, in a first possible implementation manner, sending, by the first end node, a protection switching request message to a downstream neighboring node of the first end node may specifically be: sending, by the first end node, the protection switching request message to the downstream neighboring node of the first end node by using an overhead byte on an optical network.

A fifth aspect provides an intermediate node, where the intermediate node includes: a receiving module, configured to receive a protection switching request message sent by an upstream neighboring node of the intermediate node, where the protection switching request message includes information about a first protection path, the first protection path includes a first end node, a second end node, and at least one intermediate node, the at least one intermediate node is located between the first end node and the second end node, and the intermediate node is one of the at least one intermediate node; a determining module, configured to determine, according to the information that is of the first protection path and received by the receiving module, that a protection path resource of the intermediate node is available and that the protection path resource of the intermediate node is idle; and a sending module, configured to: when the determining module determines that the protection path resource of the intermediate node is available, send the protection switching request message to a downstream neighboring node of the intermediate node, and send a first indication message to the upstream neighboring node of the intermediate node, where the first indication message is used to inform the upstream neighboring node of the intermediate node that the protection path resource of the intermediate node is available, where the receiving module is further configured to receive a second indication message that is sent by the downstream neighboring node of the intermediate node according to the protection switching request message sent by the sending module; and the determining module is further configured to learn, according to the second indication message received by the receiving module, that a protection path resource of the downstream neighboring node of the intermediate node is available, and establish a cross-connection of the first protection path on the intermediate node.

With reference to the fifth aspect, in a first possible implementation manner, the determining module is specifically configured to: when the protection path resource of the intermediate node is idle, determine that the protection path resource of the intermediate node is available; or specifically configured to: when a priority of the first protection path is higher than a priority of a second protection path, determine that the protection path resource of the intermediate node is available, where the second protection path includes a third end node, a fourth end node, and at least one intermediate node, and the intermediate node has established a cross-connection of the second protection path on the intermediate node or the intermediate node receives a protection switching request message of the second protection path.

With reference to the first possible implementation manner of the fifth aspect, in a second possible implementation manner, the priority of the first protection path is higher than the priority of the second protection path, the intermediate node has established the cross-connection of the second protection path on the intermediate node, and the determining module is further configured to remove the current cross-connection of the second protection path on the intermediate node so that the protection path resource of the intermediate node is idle.

With reference to the fifth aspect, or the first possible implementation manner or the second possible implementation manner of the fifth aspect, in a third possible implementation manner, the determining module is specifically configured to determine, according to the information about the first protection path and configuration information of the intermediate node, that the protection path resource of the intermediate node is available, where the configuration information of the intermediate node includes an identifier of at least one protection path, a priority of the at least one protection path, and information about a protection path resource of the at least one protection path, and the at least one protection path includes the first protection path.

With reference to the third possible implementation manner of the fifth aspect, in a fourth possible implementation manner, the determining module is further configured to change the configuration information of the intermediate node.

With reference to the fifth aspect, or any one manner of the first possible implementation manner to the fourth possible implementation manner of the fifth aspect, in a fifth possible implementation manner, the sending module is specifically configured to send the first indication message to the upstream neighboring node by using an overhead byte on an optical network, and send the protection switching request message to the downstream neighboring node of the intermediate node by using an overhead byte on the optical network.

A sixth aspect provides another intermediate node, where the intermediate node includes: a receiving module, configured to receive a protection switching request message sent by an upstream neighboring node of the intermediate node, where the protection switching request message includes information about a first protection path, the first protection path includes a first end node, a second end node, and at least one intermediate node, the at least one intermediate node is located between the first end node and the second end node, and the intermediate node is one of the at least one intermediate node; a determining module, configured to determine, according to the information that is of the first protection path and received by the receiving module, that a protection path resource of the intermediate node is available and the intermediate node has established a cross-connection of the first protection path on the intermediate node; and a sending module, configured to: when the determining module determines that the protection path resource of the intermediate node is available, send the protection switching request message to a downstream neighboring node of the intermediate node, where the receiving module is further configured to receive a second indication message that is sent by the downstream neighboring node of the intermediate node according to the protection switching request message sent by the sending module; the determining module is further configured to learn, according to the second indication message, that a protection path resource of the downstream neighboring node of the intermediate node is available; and the sending module is further configured to send a first indication message to the upstream neighboring node of the intermediate node, where the first indication message is used to inform the upstream neighboring node of the intermediate node that the protection path resource of the downstream neighboring node of the intermediate node is available.

With reference to the sixth aspect, in a first possible implementation manner, the determining module is specifically configured to: when a priority of the first protection path is higher than a priority of a second protection path, determine that the protection path resource of the intermediate node is available, where the second protection path includes a third end node, a fourth end node, and at least one intermediate node, the intermediate node has established a cross-connection of the second protection path on the intermediate node, and the intermediate node is a shared connection resource of the first protection path and the second protection path, where the shared connection resource indicates that protection path resources of links between the intermediate node and two neighboring nodes are the same on the first protection path and the second protection path.

With reference to the sixth aspect or the first possible implementation manner of the sixth aspect, in a second possible implementation manner, the determining module is specifically configured to: determine, according to the information about the first protection path and configuration information of the intermediate node, that the protection path resource of the intermediate node is available, where the configuration information of the intermediate node includes an identifier of at least one protection path, a priority of the at least one protection path, and information about a protection path resource of the at least one protection path, and the at least one protection path includes the first protection path.

With reference to the second possible implementation manner of the sixth aspect, in a third possible implementation manner, the determining module is further configured to change the configuration information of the intermediate node.

With reference to the sixth aspect, or any one manner of the first possible implementation manner to the third possible implementation manner of the sixth aspect, in a fourth possible implementation manner, the sending module is specifically configured to send the protection switching request message to the downstream neighboring node of the intermediate node by using an overhead byte on an optical network, and send the first indication message to the upstream neighboring node by using an overhead byte on the optical network.

A seventh aspect provides a first end node, where the first end node includes: a sending module, configured to send a protection switching request message to a downstream neighboring node of the first end node, where the protection switching request message includes information about a first protection path, the first protection path includes the first end node, a second end node, and at least one intermediate node, the at least one intermediate node is located between the first end node and the second end node, and the downstream neighboring node of the first end node is a node of the at least one intermediate node; a receiving module, configured to receive an indication message that is sent by the downstream neighboring node of the first end node according to the information that is of the first protection path and sent by the sending module; and an establishing module, configured to learn, according to the indication message received by the receiving module, that a protection path resource of the downstream neighboring node of the first end node is available, and establish a cross-connection of the first protection path on the first end node.

With reference to the seventh aspect, in a first possible implementation manner, the sending module is specifically configured to send the protection switching request message to the downstream neighboring node of the first end node by using an overhead byte on an optical network.

An eighth aspect provides a second end node, where the second end node includes: a receiving module, configured to receive a protection switching request message sent by an upstream neighboring node of the second end node, where the protection switching request message includes information about a first protection path, the first protection path includes a first end node, the second end node, and at least one intermediate node, the at least one intermediate node is located between the first end node and the second end node, and the upstream neighboring node of the second end node is a node of the at least one intermediate node; a sending module, configured to: when it is determined, according to the information that is of the first protection path and received by the receiving module, that a protection path resource of the second end node is available, send an indication message to the upstream neighboring node of the second end node, where the indication message is used to inform the upstream neighboring node of the second end node that the protection path resource of the second end node is available; and an establishing module, configured to establish a cross-connection of the first protection path on the second end node.

With reference to the eighth aspect, in a first possible implementation manner, the sending module is specifically configured to send the indication message to the upstream neighboring node of the second end node by using an overhead byte on an optical network.

In the embodiments of the present invention, when a working path between a first end node and a second end node encounters a fault, an intermediate node receives a protection switching request message sent by an upstream neighboring node of the intermediate node, and when determining that a protection path resource of the intermediate node is available and that the protection path resource of the intermediate node is idle, sends the protection switching request message to a downstream neighboring node of the intermediate node and sends a first indication message to the upstream neighboring node, so that the upstream and downstream neighboring nodes of the intermediate node can simultaneously perform a protection switching process. The protection path resource may be shared by multiple working paths. The intermediate node establishes a cross-connection of a first protection path after learning, from a second indication message sent by the downstream neighboring node of the intermediate node, that a protection path resource of the downstream neighboring node of the intermediate node is available. Therefore, protection switching can be quickly performed while resource usage is improved, thereby improving efficiency and preventing an incorrect connection of a service in a protection switching process.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a protection switching method according to an embodiment of the present invention;
FIG. 2 is a flowchart of a protection switching method according to another embodiment of the present invention;
FIG. 3 is a flowchart of a protection switching method according to still another embodiment of the present invention;
FIG. 4 is a flowchart of a protection switching method according to yet another embodiment of the present invention;
FIG. 5 is a schematic flowchart of a process of a protection switching method according to an embodiment of the present invention;
FIG. 6 is a schematic flowchart of a process of a protection switching method according to another embodiment of the present invention;
FIG. 7A and FIG. 7B are a schematic flowcharts of a process of a protection switching method according to still another embodiment of the present invention;
FIG. 8 is a structural block diagram of an intermediate node according to an embodiment of the present invention;
FIG. 9 is a structural block diagram of an intermediate node according to another embodiment of the present invention;
FIG. 10 is a structural block diagram of a first end node according to an embodiment of the present invention;
FIG. 11 is a structural block diagram of a second end node according to an embodiment of the present invention;
FIG. 12 is a schematic block diagram of a device according to an embodiment of the present invention;
FIG. 13 is a structural block diagram of an intermediate node according to still another embodiment of the present invention;
FIG. 14 is a structural block diagram of an intermediate node according to yet another embodiment of the present invention;
FIG. 15 is a structural block diagram of a first end node according to another embodiment of the present invention;
FIG. 16 is a structural block diagram of a second end node according to another embodiment of the present invention;
FIG. 17 is a schematic block diagram of a protection switching system according to an embodiment of the present invention; and
FIG. 18 is a schematic block diagram of a protection switching system according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

The technical solutions in the embodiments of the present invention may be applied to an optical network, such as an SDH (Synchronous Digital Hierarchy, synchronous digital hierarchy)/SONET (Synchronous Optical Network, synchronous optical network), or an OTN (Optical Transport Network, optical transport network).

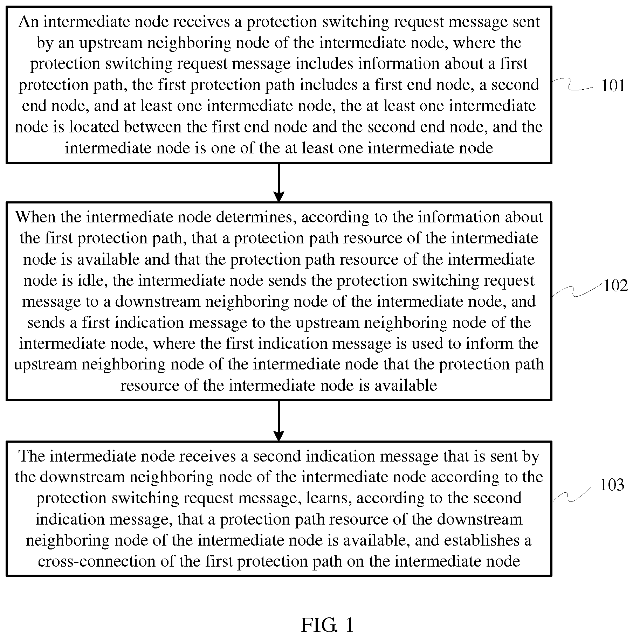

FIG. 1 is a flowchart of a protection switching method according to an embodiment of the present invention. The method in FIG. 1 is executed by an intermediate node.

101. An intermediate node receives a protection switching request message sent by an upstream neighboring node of the intermediate node, where the protection switching request message includes information about a first protection path, the first protection path includes a first end node, a second end node, and at least one intermediate node, the at least one intermediate node is located between the first end node and the second end node, and the intermediate node is one of the at least one intermediate node.

102. When the intermediate node determines, according to the information about the first protection path, that a protection path resource of the intermediate node is available and that the protection path resource of the intermediate node is idle, the intermediate node sends the protection switching request message to a downstream neighboring node of the intermediate node, and sends a first indication message to the upstream neighboring node of the intermediate node, where the first indication message is used to inform the upstream neighboring node of the intermediate node that the protection path resource of the intermediate node is available.

103. The intermediate node receives a second indication message that is sent by the downstream neighboring node of the intermediate node according to the protection switching request message, learns, according to the second indication message, that a protection path resource of the downstream neighboring node of the intermediate node is available, and establishes a cross-connection of the first protection path on the intermediate node.

In the present invention, the first end node (or the second end node) may be either one of two end nodes of the first protection path, that is, the first end node (or the second end node) may be a source node or a destination node, which is not limited in this embodiment of the present invention. For ease of description, a transmission direction of the protection switching request message is used as a reference direction in the present invention, that is, the intermediate node, the upstream neighboring node of the intermediate node, and the downstream neighboring node of the intermediate node are described in a relative manner.

Protection path resources of a node refer to a protection path resource, of a corresponding protection path, in a link from the node to an upstream neighboring node of the node and a protection path resource, of the corresponding protection path, in a link from the node to a downstream neighboring node of the node. Establishing the cross-connection of the first protection path on the intermediate node refers to establishing a cross-connection, corresponding to the first protection path, between a protection path resource in a link from the node to the upstream neighboring node of the node and a protection path resource in a link from the node to the downstream neighboring node of the node.

It should be understood that there may be one or more protection path resources in a link between nodes, and there may be one or more cross-connections in a node, which are not limited in this embodiment of the present invention. For ease of description, that there is one protection path resource in the link between the nodes is described in this embodiment of the present invention.

In this embodiment of the present invention, when a working path between a first end node and a second end node encounters a fault, an intermediate node receives a protection switching request message sent by an upstream neighboring node of the intermediate node, and when determining that a protection path resource of the intermediate node is available and that the protection path resource of the intermediate node is idle, sends the protection switching request message to a downstream neighboring node of the intermediate node and sends a first indication message to the upstream neighboring node, so that the upstream and downstream neighboring nodes of the intermediate node can simultaneously perform a protection switching process. The protection path resource may be shared by multiple working paths. The intermediate node establishes a cross-connection of a first protection path after learning, from a second indication message sent by the downstream neighboring node of the intermediate node, that a protection path resource of the downstream neighboring node of the intermediate node is available. Therefore, protection switching can be quickly performed while resource usage is improved, thereby improving efficiency and preventing an incorrect connection of a service in a protection switching process.

Optionally, as an embodiment, in step 102, the protection path resource of the intermediate node is idle, that is, when a cross-connection of any protection path is not established on the intermediate node, the intermediate node may determine that the protection path resource of the intermediate node is available. Alternatively, when the intermediate node has established a cross-connection of a second protection path on the intermediate node and a priority of the first protection path is higher than a priority of a second protection path, the intermediate node may determine that the protection path resource of the intermediate node is available. Optionally, a priority level of a protection path may be determined according to a service type, for example, a priority of service data that needs to be transmitted on the first protection path is higher than a priority of service data that needs to be transmitted on the second protection path; or a priority level of a protection path may be determined according to a fault type (for example, SF (signal fail, signal fail) or SD (signal degrade, signal degrade)) of a working path, for example, a priority of a fault type of a working path corresponding to the first protection path is higher than a priority of a fault type of a working path corresponding to the second protection path, and the like. Alternatively, when the intermediate node receives a protection switching request message of the first protection path and also receives a protection switching request message of the second protection path and the priority of the first protection path is higher than the priority of the second protection path, the intermediate node may determine that the protection path resource of the intermediate node is available. The second protection path includes a third end node, a fourth end node, and at least one intermediate node, and the intermediate node on the first protection path may also be a node on the second protection path. It should be understood that the node on the second protection path may be an intermediate node on the second protection path or an end node on the second protection path, which is not limited in the present invention.

Specifically, that two protection paths share some protection path resources is used as an example, and it is assumed that a protection path of a service 3 is A1-C-D-E-B1, and a protection path P2 of a service 4 is F1-C-D-G1, where nodes C, D and E are intermediate nodes on the protection path of the service 3, C and D are intermediate nodes on the protection path of the service 4, a protection path resource in a link C-D is a protection path resource shared between the protection path of the service 3 and the protection path of the service 4. For example, the intermediate node C receives a protection switching request message, sent by an end node A1, of the protection path of the service 3, if a protection path resource of the node C is idle (both a protection path resource in a link A1-C and the protection path resource in the link C-D are idle), the node C determines that the protection path resource of the node C is available; the node C sends a first indication message to an upstream neighboring node of the node C, namely, the node A1, and sends the protection switching request message to the node D; the node A1 learns, from the first indication message, that the protection path resource of the node C is available; when receiving a second indication message that is sent by the downstream neighboring node D of the node C according to the protection switching request message, the node C learns, according to the second indication message, that a protection path resource of the node D is available; the node C establishes a cross-connection of the first protection path on the node C, that is, to establish a cross-connection, corresponding to the first protection path, between the protection path resource in the link A1-C and the protection path resource in the link C-D. The node D is an intermediate node on the first protection path, and a process of performing protection switching on the node D is similar to that on the node C; therefore, details are not repeatedly described herein. For another example, the node C has established a cross-connection of the protection path of the service 4 on the node C, that is, a cross-connection, corresponding to the protection path of the service 4, between a protection path resource in a link F1-C and the protection path resource in the link C-D, and the node C receives a protection switching request message, sent by the end node A1, of the protection path of the service 3. If a priority of the service 3 is higher than that of the service 4, the node C determines that the protection path resource of the node C is available for the protection path of the service 3; if the priority of the service 3 is lower than that of the service 4, the node C determines that the protection path resource of the node C is unavailable for the protection path of the service 3. For still another example, the node C receives a protection switching request message, sent by the end node A1, of the protection path of the service 3 and also receives a protection switching request message, sent by the intermediate node D (or an end node F 1), of the protection path of the service 4, and the node C has not established a cross-connection of any protection path on the node C; if a priority of the protection path of the service 3 is higher than that of the protection path of the service 4, the node C determines that the protection path resource of the node C is available for the protection path of the service 3 and unavailable for the protection path of the service 4.

It should be understood that the foregoing examples are merely exemplary and not intended to limit the scope of the present invention. For example, there may be two or more protection paths, and a node shared by multiple protection paths may be one intermediate node, multiple intermediate nodes, or an end node of a protection path, and the like.

It should be further noted that, the cross-connection in the present invention may be bidirectional or unidirectional, which is also not limited in this embodiment of the present invention.

Further, in a case in which the priority of the first protection path is higher than the priority of the second protection path and the intermediate node has established the cross-connection of the second protection path on the intermediate node, before sending the first indication message to the upstream neighboring node of the intermediate node, the intermediate node may remove the cross-connection of the second protection path on the intermediate node so that the protection path resource of the intermediate node is idle.

Optionally, as another embodiment, in step 102, the intermediate node may determine, according to the information about the first protection path and configuration information of the intermediate node, whether the protection path resource is available, where the configuration information of the intermediate node includes an identifier of at least one protection path, a priority of the at least one protection path, information (for example, a protection path resource and an occupation status of the protection path resource) about a protection path resource of the at least one protection path and the like, and the at least one protection path includes the first protection path. The configuration information of the intermediate node may be preset on a corresponding intermediate node. The intermediate node may change the configuration information of the intermediate node. For example, an intermediate node C receives a protection switching request message, sent by an upstream neighboring node (a node A or a node D) of the intermediate node C, of a first protection path (A-C-D-E-B); if it is determined that a protection path resource of the intermediate node C is available, the intermediate node may change an occupation status of the protection path resource to occupied by the first protection path.

By using two protection paths as an example, on the first protection path (A-C-D-E-B) and a second protection path (F-C-D-E-G), the configuration information of the intermediate node may be exemplarily (in a form of a table) represented as follows:

**Table 1 Configuration information of an intermediate node D**

| Protection path identifier | Protection path resource | Priority | Resource occupation status |
|---|---|---|---|
| Service 1 | C-D, D-E | 2 | Idle |
| Service 2 | C-D, D-E | 1 | Idle |

**Table 2 Configuration information of the intermediate node C**

| Protection path identifier | Protection path resource | Priority | Resource occupation status |
|---|---|---|---|
| Service 1 | A-C, C-D | 2 | Occupied by the service 1 |
| Service 2 | F-C, C-D | 1 | Occupied by the service 1 |

The configuration information, listed in Table 1, of the intermediate node D includes: protection path identifiers, where, for example, a service type that is transmitted through a protection path is used for identification, an identifier of the protection path (A-C-D-E-B) is the service 1, and an identifier of the protection path (F-C-D-E-G) is the service 2; pathprotection path priorities, where, for example, a priority of the protection path of the service 1 is 2, a priority of the protection path of the service 2 is 2, where a priority level in the table is represented by a number, and a smaller number indicates a higher priority; and protection path resources, namely, protection path resources of the intermediate node D, where both the protection path of the service 1 and the protection path of the service 2 are C-D and D-E, that is, protection path resources, on the intermediate node D, of the protection path of the service 1 and the protection path of the service 2 are the same. The intermediate node D is also called a shared connection resource of the protection path of the service 1 and the protection path of the service 2.

Similarly, the configuration information, listed in Table 2, of the intermediate node C includes: the protection path identifiers, where, for example, a service type that is transmitted through a protection path is used for identification, the identifier of the protection path (A-C-D-E-B) is the service 1, and the identifier of the protection path (F-C-D-E-G) is the service 2; the protection path prioritiespath, where, for example, the priority of the protection path of the service 1 is 2, and the priority of the protection path of the service 2 is 2, where a priority level in the table is represented by a number, and a smaller number indicates a higher priority; protection path resources, namely, protection path resources of the intermediate node D, where protection path resources, on the intermediate node D, of the protection path of the service 1 are a protection path resource in a link A-C and a first protection path resource in a link C-D, and protection path resources, on the intermediate node D, of the protection path of the service 2 are a protection path resource in a link F-C and a protection path resource in the link C-D; and occupation statuses of the protection path resources of the intermediate node C, where the intermediate node C has established a cross-connection of the protection path of the service 1 on the intermediate node C, and the resource occupation status is occupied by the service 1.

To prevent repeated description, no example is further provided for describing configuration information of another intermediate node.

It should be understood that in the foregoing examples, the representation form of the configuration information of the intermediate nodes, the number of protection paths, the priority representation manner, the information about the protection path resources, and the like are merely exemplary and not intended to limit the scope of the present invention. It should be further understood that there may be one or more protection path resources in a link, which is not limited in this embodiment of the present invention.

Optionally, when determining, according to the information about the first protection path and the configuration information of the intermediate node, that the protection path resource of the intermediate node is unavailable, the intermediate node may send a response message indicating that the resource is unavailable to the upstream neighboring node, or does not execute any step.

Optionally, as another embodiment, the intermediate node may send a message (for example, a first indication message or a protection switching request message) by using an overhead byte on an optical network. Specifically, an overhead byte on an OTN or SDH network may be used, or an APS (Automatic Protection Switching, automatic protection switching) overhead byte or another reserved overhead byte that is not defined for use in a standard may be used. For example, the APS overhead byte may be divided according to a maximum sharing degree of an SMP protection path resource. It is assumed that one SMP protection path resource is shared by 8 protection paths (each protection path corresponds to one service, that is, 8 services are a service 1, a service 2, ..., and a service 8). Then, a 32-bit APS overhead byte on the OTN may be divided into 8 parts, where each part is 4 bits. 4 bits of a first part represent an SMP protection switching protocol of the service 1, 4 bits of a second part represent an SMP protection switching protocol of the service 2, ..., and so on. When the intermediate node needs to send a protection switching request message of the service 1, "0001" or the like may be filled in a 4-bit APS overhead byte corresponding to the service 1; when the intermediate node needs to send "a first indication message" of the service 1, "0010" or the like may be filled in the 4-bit APS overhead byte corresponding to the service 1.

It should be understood that the foregoing examples are merely exemplary and not intended to limit the scope of the present invention.

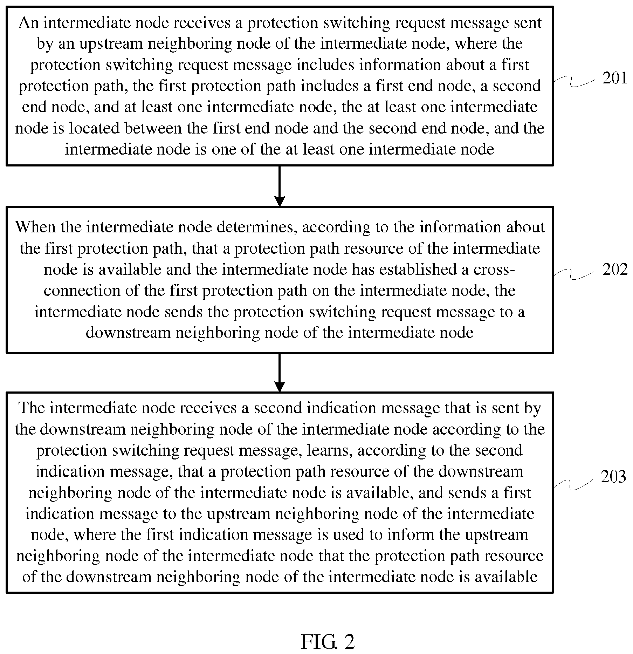

FIG. 2 is a flowchart of a protection switching method according to an embodiment of the present invention. The method in FIG. 2 is executed by an intermediate node. In addition, the method corresponds to the method in FIG. 1, and therefore the description that is the same as that in the embodiment in FIG. 1 is appropriately omitted.

201. An intermediate node receives a protection switching request message sent by an upstream neighboring node of the intermediate node, where the protection switching request message includes information about a first protection path, the first protection path includes a first end node, a second end node, and at least one intermediate node, the at least one intermediate node is located between the first end node and the second end node, and the intermediate node is one of the at least one intermediate node.

202. When the intermediate node determines, according to the information about the first protection path, that a protection path resource of the intermediate node is available and the intermediate node has established a cross-connection of the first protection path on the intermediate node, the intermediate node sends the protection switching request message to a downstream neighboring node of the intermediate node.

203. The intermediate node receives a second indication message that is sent by the downstream neighboring node of the intermediate node according to the protection switching request message, learns, according to the second indication message, that a protection path resource of the downstream neighboring node of the intermediate node is available, and sends a first indication message to the upstream neighboring node of the intermediate node, where the first indication message is used to inform the upstream neighboring node of the intermediate node that the protection path resource of the downstream neighboring node of the intermediate node is available.

In the present invention, the first end node (or the second end node) may be either one of two end nodes of the first protection path, that is, the first end node (or the second end node) may be a source node or a destination node, which is not limited in this embodiment of the present invention. For ease of description, a transmission direction of the protection switching request message is used as a reference direction in the present invention, that is, the intermediate node, the upstream neighboring node of the intermediate node, and the downstream neighboring node of the intermediate node are described in a relative manner.

Protection path resources of a node refer to a protection path resource, of a corresponding protection path, in a link from the node to an upstream neighboring node of the node and a protection path resource, of the corresponding protection path, in a link from the node to a downstream neighboring node of the node. Establishing the cross-connection of the first protection path on the intermediate node refers to establishing a cross-connection, corresponding to the first protection path, between a protection path resource in a link from the node to the upstream neighboring node of the node and a protection path resource in a link from the node to the downstream neighboring node of the node.

It should be understood that there may be one or more protection path resources in a link between nodes, and there may be one or more cross-connections in a node, which are not limited in this embodiment of the present invention. For ease of description, that there is one protection path resource in the link between the nodes is described in this embodiment of the present invention.

In this embodiment of the present invention, when a working path between a first end node and a second end node encounters a fault, an intermediate node receives a protection switching request message sent by an upstream neighboring node of the intermediate node, and when determining that a protection path resource of the intermediate node is available, sends the protection switching request message to a downstream neighboring node of the intermediate node; the intermediate node has established a cross-connection of a first protection path on the intermediate node. The protection path resource may be shared by multiple working paths. After learning, from a second indication message sent by the downstream neighboring node of the intermediate node, that a protection path resource of the downstream neighboring node of the intermediate node is available, the intermediate node sends an indication message indicating that the protection path resource of the downstream neighboring node of the intermediate node is available to the upstream neighboring node of the intermediate node. Therefore, protection switching can be quickly performed while resource usage is improved, thereby improving efficiency and preventing an incorrect connection of a service in a protection switching process.

Optionally, as an embodiment, in step 202, when the intermediate node has established a cross-connection of a second protection path on the intermediate node and a priority of the first protection path is higher than a priority of the second protection path, that is, the intermediate node determines that the protection path resource of the intermediate node is available for the first protection path, and the intermediate node determines that the protection path resource of the intermediate node is a shared connection resource of the first protection path and the second protection path. Therefore, the cross-connection that is of the second protection path on the intermediate node and has been established by the intermediate node may also be used by the first protection path, and the intermediate node does not need to remove the cross-connection that has been currently established. The second protection path includes a third end node, a fourth end node, and at least one intermediate node, and the shared connection resource indicates that protection path resources of links between the intermediate node and two neighboring nodes are the same on the first protection path and the second protection path. The intermediate node on the first protection path is also a node on the second protection path. It should be understood that the node on the second protection path may be an intermediate node on the second protection path or an end node on the second protection path, which is not limited in the present invention.

In this embodiment of the present invention, when a protection path with a higher priority preempts a protection path resource that is shared with a protection path with a lower priority, an intermediate node used as a shared connection resource does not need to repeatedly configure a cross-connection, thereby reducing complexity of an operation on the node, further reducing time of protection switching, and improving efficiency. After learning that a protection path resource of a downstream neighboring node of the intermediate node is available, the intermediate node sends, to an upstream neighboring node of the intermediate node, an indication message indicating that a protection path resource of the intermediate node is available, so as to prevent an incorrect connection of a service in a protection switching process.

Optionally, as another embodiment, in step 102, the intermediate node may determine, according to the information about the first protection path and configuration information of the intermediate node, whether the protection path resource is available, where the configuration information of the intermediate node includes an identifier of at least one protection path, a priority of the at least one protection path, information (for example, a protection path resource and an occupation status of the protection path resource) about a protection path resource of the at least one protection path and the like, and the at least one protection path includes the first protection path. The configuration information of the intermediate node may be preset on a corresponding intermediate node. The intermediate node may change the configuration information of the intermediate node. For example, an intermediate node D receives a protection switching request message, sent by an upstream neighboring node (a node C or a node E) of the intermediate node D, of a first protection path (A-C-D-E-B); when the intermediate node D has established a cross-connection of a second protection path on the intermediate node and a priority of the first protection path is higher than a priority of the second protection path, it is determined that a protection path resource of the intermediate node D is available for the first protection path and that the cross-connection that is of the second protection path on the intermediate node and has been established by the intermediate node D may also be used by the first protection path, and the intermediate node D may change an occupation status of the protection path resource to occupied by the first protection path.

For configuration information of a node, reference may be made to the embodiment in FIG. 1, and details are not repeatedly described herein to prevent repetition.

Optionally, as another embodiment, the intermediate node may send a message (for example, a first indication message or a protection switching request message) by using an overhead byte on an optical network. Specifically, an overhead byte on an OTN or SDH network may be used, or an APS overhead byte or another reserved overhead byte that is not defined for use in a standard may be used. For specific examples, reference may be made to the embodiment in FIG. 1, and details are not repeatedly described herein to prevent repetition.

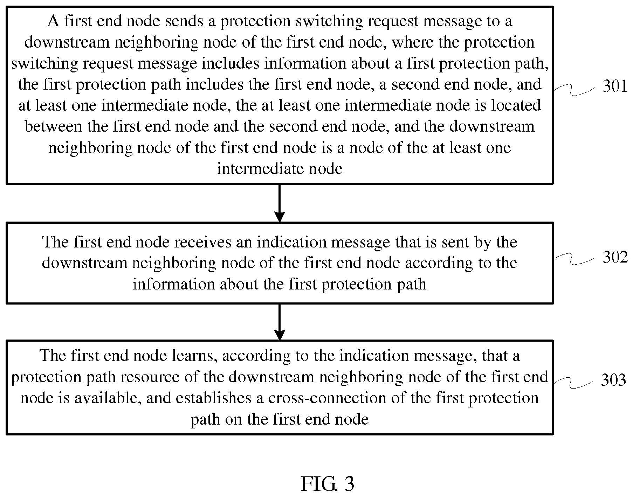

FIG. 3 is a flowchart of a protection switching method according to another embodiment of the present invention. The method in FIG. 3 is executed by a first end node. In addition, the method corresponds to the methods in FIG. 1 and FIG. 2, and therefore the description that is the same as that in the embodiments in FIG. 1 and FIG. 2 is appropriately omitted.

301. A first end node sends a protection switching request message to a downstream neighboring node of the first end node, where the protection switching request message includes information about a first protection path, the first protection path includes the first end node, a second end node, and at least one intermediate node, the at least one intermediate node is located between the first end node and the second end node, and the downstream neighboring node of the first end node is a node of the at least one intermediate node.

302. The first end node receives an indication message that is sent by the downstream neighboring node of the first end node according to the information about the first protection path.

303. The first end node learns, according to the indication message, that a protection path resource of the downstream neighboring node of the first end node is available, and establishes a cross-connection of the first protection path on the first end node.

In the present invention, the first end node (or the second end node) may be either one of two end nodes of the first protection path, that is, the first end node (or the second end node) may be a source node or a destination node, which is not limited in this embodiment of the present invention. For ease of description, a transmission direction of the protection switching request message is used as a reference direction in the present invention, that is, the downstream neighboring node of the first end node is described in a relative manner.

In this embodiment of the present invention, when a working path between a first end node and a second end node encounters a fault, the first end node initiates a protection switching process, sends a protection switching request message to a downstream neighboring node of the first end node, and after receiving a first indication message sent by the downstream neighboring node of the first end node and learning that a protection path resource of the downstream neighboring node of the first end node is available, establishes a cross-connection. Therefore, protection switching can be quickly performed while resource usage is improved, thereby improving efficiency and preventing an incorrect connection of a service in the protection switching process.

Optionally, as an embodiment, in step 301, the first end node may send the protection switching request message to the downstream neighboring node of the first end node by using an overhead byte on an optical network. Specifically, an overhead byte on an OTN or SDH network may be used, or an APS overhead byte or another reserved overhead byte that is not defined for use in a standard or the like may be used. For a specific implementation manner, reference may be made to the foregoing examples, and details are not repeatedly described herein.

Optionally, as another embodiment, the first end node may preset configuration information of the first end node. The configuration information of the first end node may include information, such as information about a protection path resource between the first end node and the downstream neighboring node of the first end node, and a priority of the first protection path.

Definitely, the first end node may also be a node on another protection path. For example, the first end node is an intermediate node on a protection path (which is not the first protection path), and when the first end node receives a protection switching request message of the protection path, similarly, a step with an intermediate node involved in the method in FIG. 1 or FIG. 2 may be executed, and details are not repeatedly described herein.

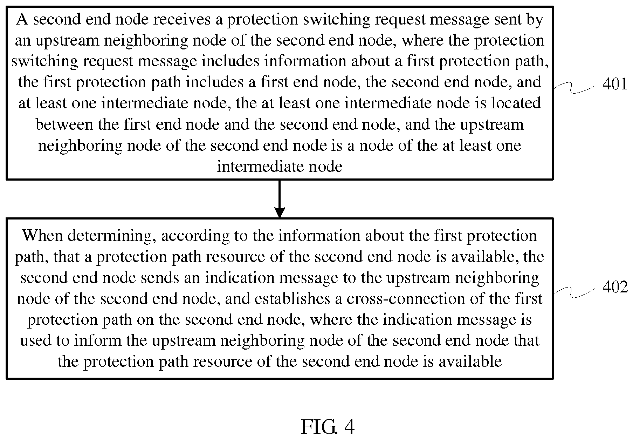

FIG. 4 is a flowchart of a protection switching method according to still another embodiment of the present invention. The method in FIG. 4 is executed by a second end node. In addition, the method corresponds to the methods in FIG. 1 to FIG. 3, and therefore the description that is the same as that in the embodiments in FIG. 1 to FIG. 3 is appropriately omitted.

401. A second end node receives a protection switching request message sent by an upstream neighboring node of the second end node, where the protection switching request message includes information about a first protection path, the first protection path includes a first end node, the second end node, and at least one intermediate node, the at least one intermediate node is located between the first end node and the second end node, and the upstream neighboring node of the second end node is a node of the at least one intermediate node.

402. When determining, according to the information about the first protection path, that a protection path resource of the second end node is available, the second end node sends an indication message to the upstream neighboring node of the second end node, and establishes a cross-connection of the first protection path on the second end node, where the indication message is used to inform the upstream neighboring node of the second end node that the protection path resource of the second end node is available.

In the present invention, the first end node (or the second end node) may be either one of two end nodes of the first protection path, that is, the first end node (or the second end node) may be a source node or a destination node, which is not limited in this embodiment of the present invention. For ease of description, a transmission direction of the protection switching request message is used as a reference direction in the present invention, that is, a downstream neighboring node of the first end node is described in a relative manner.

In this embodiment of the present invention, when a working path between a first end node and a second end node encounters a fault, the second end node receives a protection switching request message sent by an upstream neighboring node of the second end node, and when determining that a protection path resource of the second end node is available, sends an indication message to the upstream neighboring node of the second end node, so that the upstream neighboring node of the second end node learns, from the indication message, that the protection path resource of the second end node is available. Therefore, protection switching can be quickly performed while resource usage is improved, thereby improving efficiency and preventing an incorrect connection of a service in a protection switching process.

Optionally, in an implementation manner, if the upstream neighboring node of the second end node has established a cross-connection of the first protection path, the upstream neighboring node of the second end node sends an indication message indicating that the protection path resource is available to an upstream neighboring node of the upstream neighboring node of the second end node after learning that the protection path resource of the second end node is available. For an implementation manner of the upstream neighboring node (an intermediate node) of the second end node, reference may be made to the embodiment in FIG. 2. In another implementation manner, if a protection path resource of the upstream neighboring node of the second end node is idle, the upstream neighboring node of the second end node establishes a cross-connection of the first protection path on the upstream neighboring node of the second end node after learning that the protection path resource of the second end node is available. For an implementation manner of the upstream neighboring node of the second end node, reference may be made to the embodiment in FIG. 1.

Optionally, as an embodiment, in step 402, the second end node may send the indication message to the upstream neighboring node of the second end node by using an overhead byte on an optical network. Specifically, an overhead byte on an OTN or SDH network may be used, or an APS overhead byte or another reserved overhead byte that is not defined for use in a standard or the like may be used. For a specific implementation manner, reference may be made to the foregoing examples, and details are not repeatedly described herein.

Optionally, as another embodiment, the second end node may preset configuration information of the second end node. The configuration information of the second end node may include information, such as information about a protection path resource between the second end node and the upstream neighboring node of the second end node, and a priority of the first protection path.

Definitely, the second end node may also be a node on another protection path. For example, if the second end node is an intermediate node on a protection path (which is not the first protection path), when the second end node receives a protection switching request message of the protection path, similarly, a step with an intermediate node involved in the method in FIG. 1 or FIG. 2 may be executed; if the second end node is a first end node of a protection path (which is not the first protection path), similarly, a step with a first end node involved in the method in FIG. 3 may be executed, and details are not repeatedly described herein.

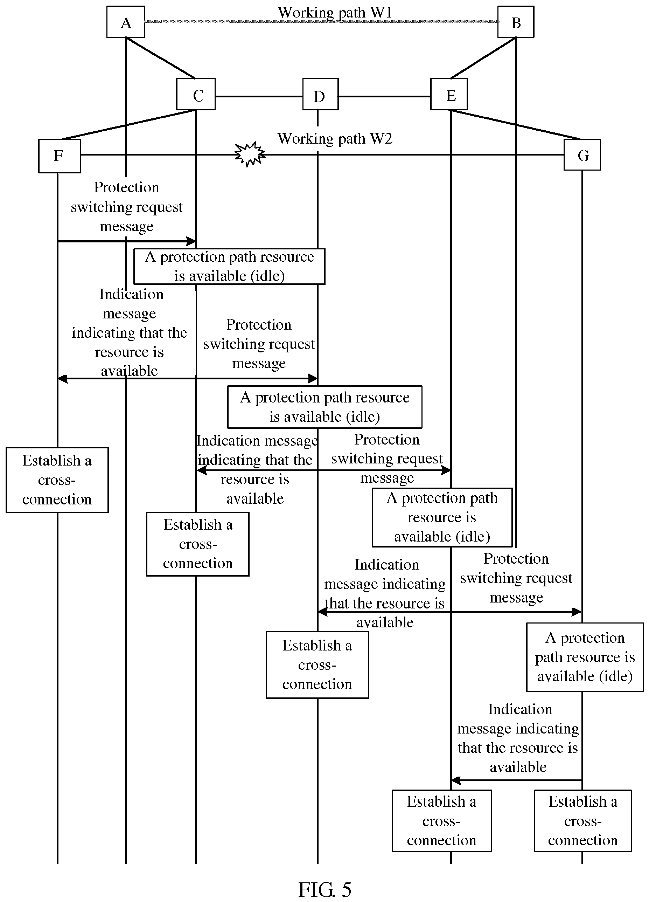

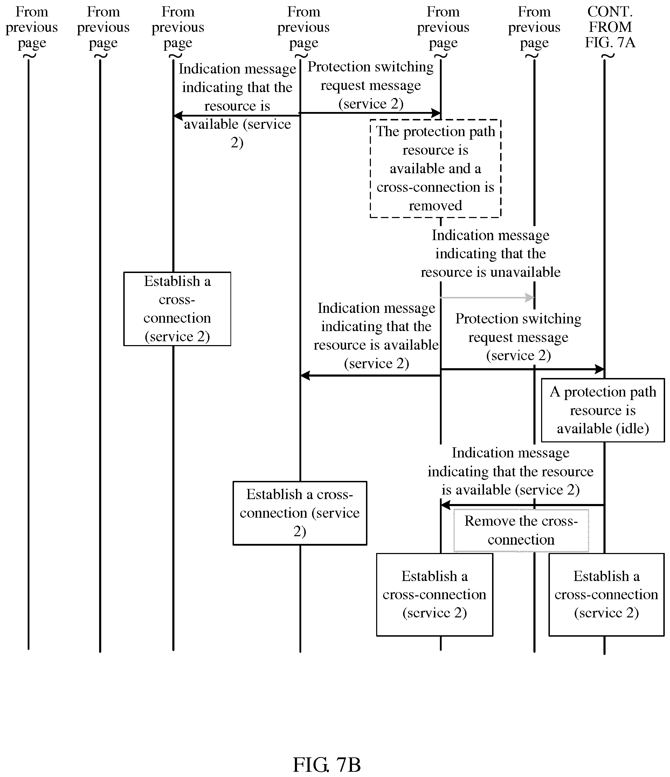

The following provides more detailed description of the embodiments of the present invention with reference to examples in FIG. 5 to FIG. 7A and FIG. 7B. For ease of description, in the embodiments in FIG. 5 to FIG. 7 A and FIG. 7B, two protection paths, namely, a protection path (A-C-D-E-B) of a service 1 and a protection path (F-C-D-E-G) of a service 2, are used as an example for description; that there is one protection path resource in a link is used as an example. It should be understood that the embodiments of the present invention are not limited thereto.

Shared connection resources of a working path W1 of the service 1, a working path W2 of the service 2, the protection path of the service 1 and the protection path of the service 2 are an intermediate node D and protection path resources in shared links C-D and D-E. It should be understood that the embodiments of the present invention are not limited thereto, and there may be more protection paths. It should be further understood that the number of intermediate nodes on each protection path is not limited in the embodiments of the present invention, and there may be fewer or more intermediate nodes.

FIG. 5 is a schematic flowchart of a process of a protection switching method according to an embodiment of the present invention. In a scenario in FIG. 5, the working path W1 is normal, the working path W2 encounters a fault, and an end node F (the foregoing first end node) initiates a protection switching process. It should be understood that this embodiment of the present invention is not limited thereto, and a protection switching process may also be initiated by an end node G.

When learning that the working path W2 encounters a fault, the end node F sends a protection switching request message to a downstream neighboring node, namely an intermediate node C, of the end node F, where the protection switching request message includes information about the protection path F-C-D-E-G, for example, a service type identifier, namely service 2. After receiving the protection switching request sent by the end node F, the intermediate node C determines, according to the information about the protection path F-C-D-E-G and configuration information of the intermediate node C, whether a protection path resource of the intermediate node C is available. For example, the configuration information of the intermediate node C may be exemplarily (in a form of a table) represented as follows:

**Table 3 Configuration information of the intermediate node C**

| Protection path identifier | Protection path resource | Priority | Resource occupation status |
|---|---|---|---|
| Service 1 | A-C, C-D | 2 | Idle |
| Service 2 | F-C, C-D | 1 | Idle |

**Table 4 Configuration information of the intermediate node C**

| Protection path identifier | Protection path resource | Priority | Resource occupation status |
|---|---|---|---|
| Service 1 | A-C, C-D | 2 | Occupied by the service 2 |
| Service 2 | F-C, C-D | 1 | Occupied by the service 2 |

The intermediate node C determines that protection switching is requested for a protection path of the service 2, and determines that a resource occupation status is "Idle", that is, determines that the protection path resource of the intermediate node C is available, and changes the resource occupation status "Idle" in the configuration information of the intermediate node C to "Occupied by the service 2", as shown in Table 4. The intermediate node C sends an indication message indicating that the resource is available to an upstream neighboring node, namely the end node F, of the intermediate node C, and sends the protection switching request message to a downstream neighboring node, namely the intermediate node D, of the intermediate node C, where the indication message indicating that the resource is available is used to inform the upstream neighboring node, namely the end node F, of the intermediate node C that the protection path resource of the intermediate node C is available.

In an upstream direction of the intermediate node C, the end node F receives the indication message that indicates the resource is available and that is sent by the intermediate node C, and learns that the protection path resource of the intermediate node C is available; the end node F may establish a cross-connection (namely, a cross-connection between a protection path resource in a link from a client-side port to the end node F and a protection path resource in a link F-C) of the protection path of the service 2 on the end node F. In a downstream direction of the intermediate node C, similarly, after receiving the protection switching request message sent by an upstream neighboring node, namely the intermediate node C, of the intermediate node D, the intermediate node D determines, according to the information about the protection path F-C-D-E-G and configuration information of the intermediate node D, whether a protection path resource of the intermediate node D is available. The intermediate node D determines, according to the configuration information of the intermediate node D, that protection switching is requested for the protection path of the service 2, determines that a resource occupation status is "Idle", that is, determines that the protection path resource of the intermediate node D is available, and changes the resource occupation status "Idle" in the configuration information of the intermediate node D to "Occupied by the service 2". The intermediate node D sends an indication message indicating that the resource is available to the upstream neighboring node, namely the intermediate node C, of the intermediate node D, and sends the protection switching request message to a downstream neighboring node, namely an intermediate node E, of the intermediate node D, where the indication message indicating that the resource is available is used to inform the upstream neighboring node, namely the intermediate node C, of the intermediate node D that the protection path resource of the intermediate node D is available.

The intermediate node C receives the indication message that indicates the resource is available and that is sent by the intermediate node D, and learns that the protection path resource of the intermediate node D is available; the intermediate node C establishes a cross-connection (namely, a cross-connection between a protection path resource in a link F-C and a protection path resource of a link C-D) of the protection path of the service 2 on the intermediate node C. Similarly, for protection switching steps executed by the intermediate node E, reference may be made to the foregoing description, and details are not repeatedly described herein to prevent repetition.

After receiving the protection switching request message sent by an upstream neighboring node, namely the intermediate node E, of the end node G (the foregoing second end node), optionally, the end node G (the foregoing second end node) determines, according to the information about the protection path F-C-D-E-G and configuration information of the end node G, whether a protection path resource of the end node G is available. The end node G may determine, according to the configuration information of the end node G, that protection switching is requested for the protection path of the service 2, determines that a resource occupation status is "Idle", that is, determines that the protection path resource of the end node G is available, and changes the resource occupation status "Idle" in the configuration information of the end node G to "Occupied by the service 2". The end node G sends an indication message indicating that the resource is available to the upstream neighboring node, namely the intermediate node E, of the end node G, so that the intermediate node E establishes a cross-connection (namely, a cross-connection between a protection path resource in a link D-E and a protection path resource of a link E-G) of the protection path of the service 2 on the intermediate node E when learning that the protection path resource of the end node G is available. Meanwhile, the end node G also establishes a cross-connection (namely, a cross-connection between a protection path resource in the link E-G and a protection path resource in a link from another client-side port to the end node G) of the protection path of the service 2 on the end node G.

Optionally, in this embodiment of the present invention, a message (for example, an indication message or a protection switching request message) sent by each node may be sent by using an overhead byte on an optical network. Specifically, an overhead byte on an OTN or SDH network may be used, or an APS overhead byte or another reserved overhead byte that is not defined for use in a standard may be used. For example, when a node needs to send a protection switching request message of the service 2, "0011" or the like may be filled in a 4-bit APS overhead byte corresponding to the service 2; when the node needs to send "an indication message" of the service 2, "0100" or the like may be filled in the 4-bit APS overhead byte corresponding to the service 2.

According to the foregoing solution, when a working path between two end nodes encounters a fault, one end node (a first end node) initiates a protection switching process, each intermediate node receives a protection switching request message sent by an upstream neighboring node of the node, and when determining that a protection path resource of the node is available, sends an indication message indicating that the resource is available to the upstream neighboring node of the node, and sends the protection switching request message to a downstream neighboring node of the node, so that the upstream node and downstream node of the node can simultaneously perform a protection switching process. The protection path resource may be shared by multiple working paths. The upstream neighboring node of the node establishes a cross-connection after learning, from the indication message, that a protection path resource of the downstream neighboring node of the node is available. Therefore, protection switching can be quickly performed while resource usage is improved, thereby improving efficiency and preventing an incorrect connection of a service in the protection switching process.

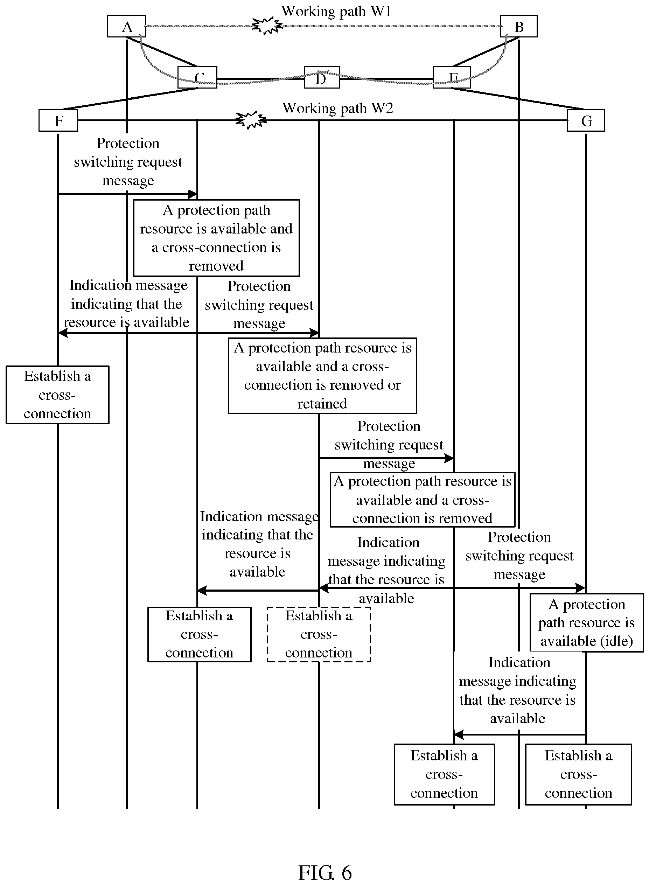

FIG. 6 is a schematic flowchart of a process of a protection switching method according to another embodiment of the present invention. Details about steps same as or similar to those in FIG. 5 are not further described herein to prevent repetition. In a scenario in FIG. 6, the working path W1 encounters a fault, and nodes A, C, D, E and B have established cross-connections of the protection path of the service 1, that is, the protection path resources in the shared links C-D and D-E on the protection path of the service 1 and the protection path of the service 2 are occupied. When the working path W2 encounters a fault, an end node F (the foregoing first end node) initiates a protection switching process. It should be understood that this embodiment of the present invention is not limited thereto, and a protection switching process may also be initiated by an end node G.

When learning that the working path W2 encounters a fault, the end node F sends a protection switching request message to a downstream neighboring node, namely the intermediate node C, of the end node F, where the protection switching request message includes information about the protection path F-C-D-E-G, for example, a service type identifier, namely service 2. After receiving the protection switching request sent by the end node F, the intermediate node C determines, according to the information about the protection path F-C-D-E-G and configuration information of the intermediate node C, whether a protection path resource of the intermediate node C is available. For example, the configuration information of the intermediate node C may be exemplarily (in a form of a table) represented as follows:

**Table 5 Configuration information of the intermediate node C**

| Protection path identifier | Protection path resource | Priority | Resource occupation status |
|---|---|---|---|
| Service 1 | A-C, C-D | 2 | Occupied by the service 1 |
| Service 2 | F-C, C-D | 1 | Occupied by the service 1 |

**Table 6 Configuration information of the intermediate node C**

| Protection path identifier | Protection path resource | Priority | Resource occupation status |
|---|---|---|---|
| Service 1 | A-C, C-D | 2 | Occupied by the service 2 |
| Service 2 | F-C, C-D | 1 | Occupied by the service 2 |

The intermediate node C determines that protection switching is requested for the protection path of the service 2, determines that a resource occupation status is "Occupied by the service 1 ", and further compares priorities of the protection path of the service 1 and the protection path of the service 2. A priority level "1" of the service 2 is higher than a priority level "2" of the service 1, that is, for the protection path of the service 2, the protection path resource of the intermediate node C is available, and the resource occupation status "Occupied by the service 1" in the configuration information of the intermediate node C is changed to "Occupied by the service 2", as listed in Table 6. The intermediate node C removes a cross-connection (namely, a cross-connection between a protection path resource of a link A-C and a protection path resource of the link C-D) of the protection path of the service 1 on the intermediate node C. The intermediate node C sends an indication message indicating that the resource is available to an upstream neighboring node, namely the end node F, of the intermediate node C, and sends the protection switching request message to a downstream neighboring node, namely the intermediate node D, of the intermediate node C, where the indication message indicating that the resource is available is used to inform the upstream neighboring node, namely the end node F, of the intermediate node C that the protection path resource of the intermediate node C is available. Optionally, the intermediate node C may send a message indicating that the resource is preempted to the end node A or the end node B.

In an upstream direction of the intermediate node C, the end node F receives the indication message that indicates the resource is available and that is sent by the intermediate node C, and learns that the protection path resource of the intermediate node C is available; the end node F may establish a cross-connection (namely, a cross-connection between a protection path resource in a link from a client-side port to the end node F and a protection path resource of a link F-C) of the protection path of the service 2 on the end node F. In a downstream direction of the intermediate node C, after receiving the protection switching request message sent by an upstream neighboring node, namely the intermediate node C, of the intermediate node D, the intermediate node D determines, according to the information about the protection path F-C-D-E-G and configuration information of the intermediate node D, whether a protection path resource of the intermediate node D is available. For example, the configuration information of the intermediate node D may be exemplarily (in a form of a table) represented as follows:

**Table 7 Configuration information of the intermediate node D**

| Protection path identifier | Protection path resource | Priority | Resource occupation status |
|---|---|---|---|
| Service 1 | C-D, D-E | 2 | Occupied by the service 1 |
| Service 2 | C-D, D-E | 1 | Occupied by the service 1 |

**Table 8 Configuration information of the intermediate node D**

| Protection path identifier | Protection path resource | Priority | Resource occupation status |
|---|---|---|---|
| Service 1 | C-D, D-E | 2 | Occupied by the service 2 |
| Service 2 | C-D, D-E | 1 | Occupied by the service 2 |

The intermediate node D determines that protection switching is requested for the protection path of the service 2, determines that a resource occupation state is "Occupied by the service 1 ", and further compares the priorities of the protection path of the service 1 and the protection path of the service 2. The priority level " 1" of the service 2 is higher than the priority level "2" of the service 1, that is, for the protection path of the service 2, the protection path resource of the intermediate node D is available, and the resource occupation status "Occupied by the service 1" in the configuration information of the intermediate node D is changed to "Occupied by the service 2", as listed in Table 8. Optionally, the intermediate node D may remove a cross-connection of the protection path of the service 1 on the intermediate node D; or the intermediate node D determines that protection path resources (the protection path resources of the links C-D and D-E), on the intermediate node D, of the protection path of the service 1 and the protection path of the service 2 are the same, that is, the intermediate node D is a shared connection resource of the protection path of the service 1 and the protection path of the service 2, and the intermediate node D may retain the current cross-connection on the intermediate node D.

Optionally, in a case in which the intermediate node D has removed the cross-connection on the intermediate node D, the intermediate node D sends an indication message indicating that the resource is available to the upstream neighboring node, namely the intermediate node C, of the intermediate node D, and sends the protection switching request message to a downstream neighboring node, namely the intermediate node E, of the intermediate node D, where the indication message indicating that the resource is available is used to inform the upstream neighboring node, namely the intermediate node C, of the intermediate node D that the protection path resource of the intermediate node D is available. In a case in which the intermediate node D retains the current cross-connection on the intermediate node D, the intermediate node D first sends the protection switching request message to the downstream neighboring node E of the intermediate node D, and sends an indication message indicating that the resource is available to the upstream neighboring node, namely the intermediate node C, of the intermediate node D after receiving an indication message that indicates the resource is available and that is sent by the intermediate node E.

The intermediate node C receives the indication message that indicates the resource is available and that is sent by the intermediate node D and learns that the protection path resource of the intermediate node D is available, and the intermediate node C establishes a cross-connection (namely, a cross-connection between a protection path resource of the link F-C and a protection path resource of the link C-D) of the protection path of the service 2 on the intermediate node C.

Similarly, for protection switching steps executed by the intermediate node E, reference may be made to the foregoing description, and details are not further described herein to prevent repetition. The intermediate node E receives the protection switching request message sent by the intermediate node D. Because a priority of the service 2 is higher than a priority of the service 1, the intermediate node E removes a cross-connection that is of the protection path of the service 1 and established on the intermediate node E. The intermediate node E sends an indication message indicating that the resource is available to an upstream neighboring node, namely the intermediate node D, of the intermediate node E, and sends the protection switching request message to a downstream neighboring node, namely the end node G (the foregoing second end node), of the intermediate node E, where the indication message indicating that the resource is available is used to inform the upstream neighboring node, namely the intermediate node D, of the intermediate node E that a protection path resource of the intermediate node E is available.

In an upstream direction of the intermediate node E, the intermediate node D receives the indication message that indicates the resource is available and that is sent by the intermediate node E, and learns that the protection path resource of the intermediate node E is available. Optionally, the intermediate node D may establish a cross-connection (namely, a cross-connection between a protection path resource of the link C-D and a protection path resource of the link D-E) of the protection path of the service 2 on the intermediate node D. In a downstream direction of the intermediate node E, after receiving the protection switching request message sent by an upstream neighboring node, namely the intermediate node E, of the end node G, optionally, the end node G determines, according to the information about the protection path F-C-D-E-G and configuration information of an intermediate node G, whether a protection path resource of the end node G is available. Optionally, the end node G may determine, according to the configuration information of the end node G, that protection switching is requested for the protection path of the service 2, determines that a resource occupation status is "Idle", that is, determines that the protection path resource of the end node G is available, and changes the resource occupation status "Idle" in the configuration information of the end node G to "Occupied by the service 2". The end node G sends an indication message indicating that the resource is available to the upstream neighboring node, namely the intermediate node E, of the end node G, so that the intermediate node E establishes a cross-connection of the protection path of the service 2 on the intermediate node E when learning that the protection path resource of the end node G is available. Meanwhile, the end node G also establishes a cross-connection of the protection path of the service 2 on the end node G.

Optionally, in this embodiment of the present invention, a message (for example, an indication message or a protection switching request message) sent by each node may be sent by using an overhead byte on an optical network. Specifically, an overhead byte on an OTN or SDH network may be used, or an APS overhead byte or another reserved overhead byte that is not defined for use in a standard may be used.

In this embodiment of the present invention, when a protection path with a higher priority preempts a protection path resource that is shared with a protection path with a lower priority, a first end node on the protection path with the higher priority initiates a protection switching process; each intermediate node receives a protection switching request message sent by an upstream neighboring node of the node, and when it is determined that a protection path resource of the node is available and in a case in which the protection path resource of the intermediate node is idle, sends an indication message indicating that the resource is available to the upstream neighboring node of the node and sends the protection switching request message to a downstream neighboring node of the node, so that the upstream node and downstream node of the node can simultaneously perform a protection switching process. The protection path resource may be shared by multiple working paths. The upstream neighboring node of the node establishes a cross-connection after learning, from the indication message, that a protection path resource of the downstream neighboring node of the node is available. Therefore, protection switching can be quickly performed while resource usage is improved, thereby improving efficiency and preventing an incorrect connection of a service in the protection switching process.

In addition, an intermediate node used as a shared connection resource may retain a cross-connection that has been established currently, and does not need to repeatedly configure a cross-connection, thereby reducing complexity of an operation on the node, further reducing time of protection switching, and improving efficiency.

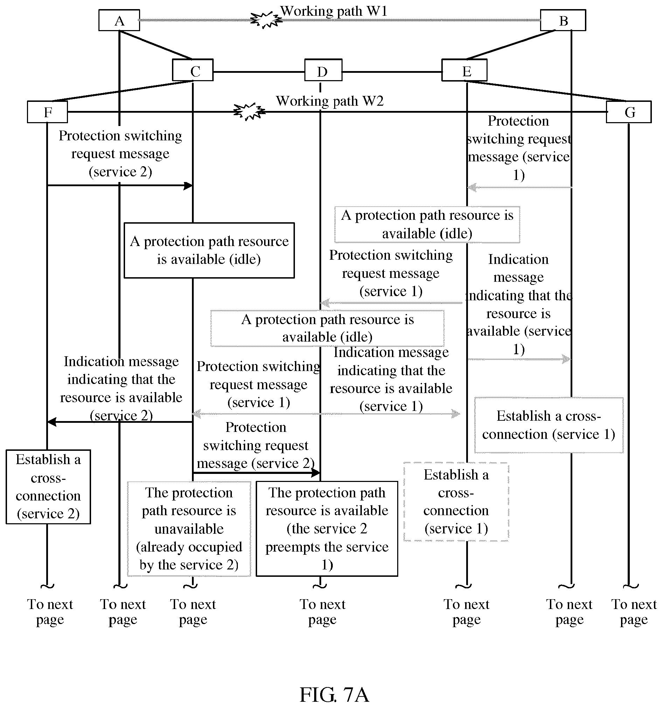

FIG. 7A and FIG. 7B are schematic flowcharts of a process of a protection switching method according to still another embodiment of the present invention. Details about steps same as or similar to those in FIG. 5 and FIG. 6 are not further described herein to prevent repetition. In a scenario in FIG. 7 A and FIG. 7B, both the working path W1 and the working path W2 encounter a fault, the shared connection resources of the protection path of the service 1 and the protection path of the service 2 are the intermediate node D and the protection path resources in the shared link C-D and D-E, and each intermediate node has not established a cross-connection, that is, in a case in which a protection resource is idle. Both an end node B and an end node F (the foregoing first end node) initiate a protection switching process, and a case in which the end node B and the end node F simultaneously attempts to preempt a protection path resource occurs. It should be understood that in this embodiment of the present invention, a protection switching process may also be initiated by the end node B and an end node G, or a protection switching process may also be initiated by the end node G and an end node A, which is not limited in this embodiment of the present invention.

When learning that the working path W1 encounters a fault, the end node B sends a protection switching request message to a downstream neighboring node, namely an intermediate node E, of the end node B, where the protection switching request message includes information about the protection path A-C-D-E-B, for example, a service type identifier, namely service 1. After receiving the protection switching request sent by the end node B, the intermediate node E determines, according to the information about the protection path A-C-D-E-B and configuration information of the intermediate node E, whether a protection path resource of the intermediate node E is available. For example, the configuration information of the intermediate node E may be exemplarily (in a form of a table) represented as follows:

**Table 9 Configuration information of the intermediate node E**

| Protection path identifier | Protection path resource | Priority | Resource occupation status |
|---|---|---|---|
| Service 1 | D-E, E-B | 2 | Idle |
| Service 2 | D-E, E-G | 1 | Idle |

**Table 10 Configuration information of the intermediate node E**

| Protection path identifier | Protection path resource | Priority | Resource occupation status |
|---|---|---|---|
| Service 1 | D-E, E-B | 2 | Occupied by the service 1 |
| Service 2 | D-E, E-G | 1 | Occupied by the service 1 |

The intermediate node E determines that protection switching is requested for the protection path of the service 1, determines that a resource occupation status is "Idle", that is, determines that the protection path resource of the intermediate node E is available, and changes the resource occupation status "Idle" in the configuration information of the intermediate node E to "Occupied by the service 1", as listed in Table 10. The intermediate node E sends an indication message indicating that the resource is available to an upstream neighboring node, namely the end node B, of the intermediate node E, and sends the protection switching request message to a downstream neighboring node, namely the intermediate node D, of the intermediate node E, where the indication message indicating that the resource is available is used to inform the upstream neighboring node, namely the end node B, of the intermediate node E that the protection path resource of the intermediate node E is available. The end node B receives the indication message that indicates the resource is available and that is sent by the intermediate node E and learns that the protection path resource of the intermediate node E is available, and the end node B may establish a cross-connection (namely, a cross-connection between a protection path resource in a link from a client-side port to the end node B and a protection path resource of a link B-E) of the protection path of the service 1 on the end node B.

Similarly, when learning that the working path W2 encounters a fault, the end node F sends a protection switching request message to a downstream neighboring node, namely an intermediate node C, of the end node F, where the protection switching request message includes information about the protection path F-C-D-E-G, for example, a service type identifier, namely service 2path. After receiving the protection switching request sent by the end node F, the intermediate node C determines, according to the information about the protection path F-C-D-E-G and configuration information (as listed in Table 3) of the intermediate node C, whether a protection path resource of the intermediate node C is available. The intermediate node C determines that protection switching is requested for the protection path of the service 2, determines that a resource occupation status is "Idle", that is, determines that the protection path resource of the intermediate node C is available, and changes the resource occupation status "Idle" in the configuration information of the intermediate node C to "Occupied by the service 2", as listed in Table 4. The intermediate node C sends an indication message indicating that the resource is available to an upstream neighboring node, namely the end node F, of the intermediate node C, and sends the protection switching request message to a downstream neighboring node, namely the intermediate node D, of the intermediate node C, where the indication message indicating that the resource is available is used to inform the upstream neighboring node, namely the end node F, of the intermediate node C that the protection path resource of the intermediate node C is available. The end node F receives the indication message that indicates the resource is available and that is sent by the intermediate node C and learns that the protection path resource of the intermediate node C is available, and the end node F may establish a cross-connection (namely, a cross-connection between a protection path resource in a link from a client-side port to the end node F and a protection path resource of a link F-C) of the protection path of the service 2 on the end node F.

Exemplarily, when the intermediate node D first receives the protection switching request message, sent by the intermediate node E, of the protection path of the service 1, the intermediate node D determines, according to the information about the protection path A-C-D-E-B and configuration information of the intermediate node D, whether a protection path resource of the intermediate node D is available. For example, the configuration information of the intermediate node D may be exemplarily (in a form of a table) represented as follows:

**Table 11 Configuration information of the intermediate node D**

| Protection path identifier | Protection path resource | Priority | Resource occupation status |
|---|---|---|---|
| Service 1 | C-D, D-E | 2 | Idle |
| Service 2 | C-D, D-E | 1 | Idle |

**Table 12 Configuration information of the intermediate node D**

| Protection path identifier | Protection path resource | Priority | Resource occupation status |
|---|---|---|---|
| Service 1 | C-D, D-E | 2 | Occupied by the service 1 |
| Service 2 | C-D, D-E | 1 | Occupied by the service 1 |

**Table 13 Configuration information of the intermediate node D**

| Protection path identifier | Protection path resource | Priority | Resource occupation status |
|---|---|---|---|
| Service 1 | C-D, D-E | 2 | Occupied by the service 2 |
| Service 2 | C-D, D-E | 1 | Occupied by the service 2 |

The intermediate node D determines, according to the configuration information of the intermediate node D, that protection switching is requested for the protection path of the service 1, determines that a resource occupation status is "Idle", that is, determines that the protection path resource of the intermediate node D is available, and changes the resource occupation status "Idle" in the configuration information of the intermediate node D to "Occupied by the service 1". The intermediate node D sends an indication message indicating that the resource is available to an upstream neighboring node, namely the intermediate node E, of the intermediate node D, and sends the protection switching request message of the protection path of the service 1 to a downstream neighboring node, namely the intermediate node C, of the intermediate node D, where the indication message indicating that the resource is available is used to inform the upstream neighboring node, namely the intermediate node E, of the intermediate node D that the protection path resource of the intermediate node D is available. When the intermediate node D also receives a protection switching request message, sent by the intermediate node C, of the protection path of the service 2, the intermediate node D determines, according to the information about the protection path F-C-D-E-G and the configuration information (as listed in Table 12) of the intermediate node D, whether the protection path resource of the intermediate node D is available. Specifically, the intermediate node D determines that protection switching is requested for the protection path of the service 2, determines that the resource occupation status is "Occupied by the service 1 ", and further compares priorities of the protection path of the service 1 and the protection path of the service 2. A priority level "1" of the service 2 is higher than a priority level "2" of the service 1, that is, for the protection path of the service 2, the protection path resource of the intermediate node D is available, and the resource occupation status "Occupied by the service 1" in the configuration information of the intermediate node D is changed to "Occupied by the service 2", as listed in Table 13. In this case, the intermediate node D has not established a cross-connection. The intermediate node D sends an indication message indicating that the resource is available to an upstream neighboring node, namely the intermediate node C, of the intermediate node D, where the indication message indicating that the resource is available is used to inform the intermediate node C that the protection path resource of the intermediate node D is available, and sends the protection switching request message of the protection path of the service 2 to a downstream neighboring node, namely the intermediate node E, of the intermediate node D. Optionally, the intermediate node D may further send an indication message of the service 1 indicating that the resource is unavailable to the intermediate node E.

When the intermediate node C receives the protection switching request message, sent by the intermediate node D, of the protection path of the service 1, because a priority of the service 1 is lower than a priority of the service 2, the intermediate node C may not return any message to the intermediate node D, or may return a response message indicating that the resource is unavailable (for the service 1) to the intermediate node D. The intermediate node C receives the indication message that indicates the resource is available (for the service 2) and that is sent by the intermediate node D, and establishes a cross-connection (namely, a cross-connection between a protection path resource in the link F-C and a protection path resource of the link C-D) of the protection path of the service 2 on the intermediate node C.

On the intermediate node E, when the intermediate node E receives the protection switching request message, sent by the intermediate node D, of the protection path of the service 2, the intermediate node E determines, according to the configuration information (as listed in Table 10) of the intermediate node E, that protection switching is requested for the protection path of the service 2, determines that the resource occupation status is "Occupied by the service 1 ", and further compares the priorities of the protection path of the service 1 and the protection path of the service 2. The priority level "1" of the service 2 is higher than the priority level "2" of the service 1, that is, for the protection path of the service 2, the protection path resource of the intermediate node E is available, and the resource occupation status "Occupied by the service 1" in the configuration information of the intermediate node E is changed to "Occupied by the service 2", as listed in Table 14.

**Table 14 Configuration information of the intermediate node E**

| Protection path identifier | Protection path resource | Priority | Resource occupation status |
|---|---|---|---|
| Service 1 | D-E, E-B | 2 | Occupied by the service 2 |
| Service 2 | D-E, E-G | 1 | Occupied by the service 2 |

If the intermediate node E has established a cross-connection (between the link D-E and a link E-B) occupied by the protection path of the service 1, the intermediate node E removes the current cross-connection. Optionally, the intermediate node E may send the message of the service 1 indicating that the resource is unavailable to the end node B, so that the end node B removes the cross-connection of the protection path of the service 1 on the end node B. The intermediate node E sends an indication message indicating that the resource is available (for the service 2) to the intermediate node D, and sends the protection switching request message of the protection path of the service 2 to the end node G (the foregoing second end node), where the indication message indicating that the resource is available is used to inform the intermediate node D that the protection path resource of the intermediate node E is available.

After receiving the protection switching request message that is of the protection path of the service 2 and is sent by an upstream neighboring node, namely the intermediate node E, of the end node G, optionally, the end node G determines, according to the information about the protection path F-C-D-E-G and configuration information of an intermediate node G, whether a protection path resource of the end node G is available. Optionally, the end node G may determine, according to the configuration information of the end node G, that protection switching is requested for the protection path of the service 2, determines that a resource occupation status is "Idle", that is, determines that the protection path resource of the end node G is available, and changes the resource occupation status "Idle" in the configuration information of the end node G to "Occupied by the service 2". The end node G sends an indication message indicating that the resource is available (for the service 2) to the upstream neighboring node, namely the intermediate node E, of the end node G, so that the intermediate node E establishes a cross-connection of the protection path of the service 2 on the intermediate node E when learning that the protection path resource of the end node G is available. Meanwhile, the end node G also establishes a cross-connection of the protection path of the service 2 on the end node G.

It should be understood that a time sequence of protection switching processes initiated by the end node B and the end node F is not limited in this embodiment of the present invention. When multiple paths preempt a shared protection path resource at the same time, operations on each node are related to a sequence of protection switching processes initiated on the paths. The embodiment in FIG. 7 A and FIG. 7B are merely exemplary and not intended to limit the scope of the present invention. It should be further noted that, the established cross-connection may be bidirectional or unidirectional, which is also not limited in this embodiment of the present invention.

In this embodiment of the present invention, multiple protection paths preempt a shared protection path resource at the same time, a first end node initiates a protection switching process; each intermediate node receives a protection switching request message sent by an upstream neighboring node of the node, and when it is determined that a protection path resource of the node is available and in a case in which a cross-connection of any one path is not established on the node, sends an indication message indicating that the resource is available to the upstream neighboring node of the node and sends the protection switching request message to a downstream neighboring node of the node, so that the upstream node and downstream node of the node can simultaneously perform a protection switching process. The protection path resource may be shared by the multiple working paths. The upstream neighboring node of the node establishes a cross-connection after learning, from the indication message, that a protection path resource of the downstream neighboring node of the node is available. Therefore, protection switching can be quickly performed while resource usage is improved, thereby improving efficiency and preventing an incorrect connection of a service in the protection switching process.

In addition, an intermediate node used as a shared connection resource does not need to repeatedly configure a cross-connection, thereby reducing complexity of an operation on the node, further reducing time of protection switching, and improving efficiency.

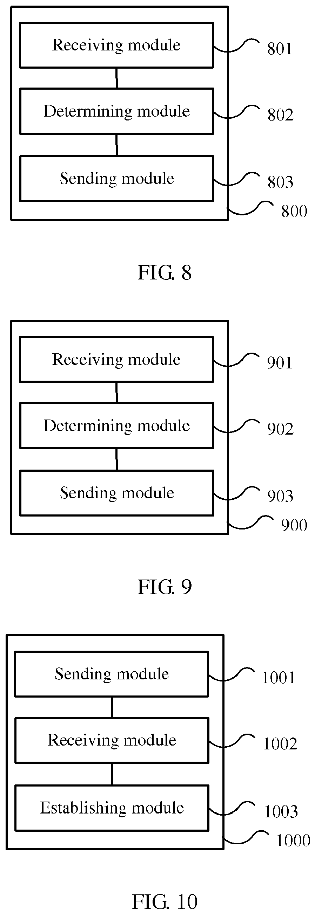

FIG. 8 is a structural block diagram of an intermediate node according to an embodiment of the present invention. An intermediate node 800 in FIG. 8 includes a receiving module 801, a determining module 802, and a sending module 803.

The receiving module 801 is configured to receive a protection switching request message sent by an upstream neighboring node of the intermediate node, where the protection switching request message includes information about a first protection path, the first protection path includes a first end node, a second end node, and at least one intermediate node, the at least one intermediate node is located between the first end node and the second end node, and the intermediate node is one of the at least one intermediate node.

The determining module 802 is configured to determine, according to the information that is of the first protection path and received by the receiving module 801, that a protection path resource of the intermediate node is available and that the protection path resource of the intermediate node is idle.

The sending module 803 is configured to: when the determining module 802 determines that the protection path resource of the intermediate node is available, send the protection switching request message to a downstream neighboring node of the intermediate node, and send a first indication message to the upstream neighboring node of the intermediate node, where the first indication message is used to inform the upstream neighboring node of the intermediate node that the protection path resource of the intermediate node is available.

The receiving module 801 is further configured to receive a second indication message that is sent by the downstream neighboring node of the intermediate node according to the protection switching request message sent by the sending module 803.

The determining module 802 is further configured to learn, according to the second indication message received by the receiving module 801, that a protection path resource of the downstream neighboring node of the intermediate node is available, and establish a cross-connection of the first protection path on the intermediate node.

In the present invention, the first end node (or the second end node) may be either one of two end nodes of the first protection path, that is, the first end node (or the second end node) may be a source node or a destination node, which is not limited in this embodiment of the present invention. For ease of description, a transmission direction of the protection switching request message is used as a reference direction in the present invention, that is, the intermediate node, the upstream neighboring node of the intermediate node, and the downstream neighboring node of the intermediate node are described in a relative manner.

Protection path resources of a node refer to a protection path resource, of a corresponding protection path, in a link from the node to an upstream neighboring node of the node and a protection path resource, of the corresponding protection path, in a link from the node to a downstream neighboring node of the node. Establishing the cross-connection of the first protection path on the intermediate node refers to establishing a cross-connection, corresponding to the first protection path, between a protection path resource in a link from the node to the upstream neighboring node of the node and a protection path resource in a link from the node to the downstream neighboring node of the node.

It should be understood that there may be one or more protection path resources in a link between nodes, and there may be one or more cross-connections in a node, which are not limited in this embodiment of the present invention. For ease of description, that there is one protection path resource in the link between the nodes is described in this embodiment of the present invention.

In this embodiment of the present invention, when a working path between a first end node and a second end node encounters a fault, an intermediate node receives a protection switching request message sent by an upstream neighboring node of the intermediate node, and when determining that a protection path resource of the intermediate node is available and that the protection path resource of the intermediate node is idle, sends the protection switching request message to a downstream neighboring node of the intermediate node and sends a first indication message to the upstream neighboring node, so that the upstream and downstream neighboring nodes of the intermediate node can simultaneously perform a protection switching process. The protection path resource may be shared by multiple working paths. The intermediate node establishes a cross-connection of a first protection path after learning, from a second indication message sent by the downstream neighboring node of the intermediate node, that a protection path resource of the downstream neighboring node of the intermediate node is available. Therefore, protection switching can be quickly performed while resource usage is improved, thereby improving efficiency and preventing an incorrect connection of a service in a protection switching process.

The intermediate node 800 may implement the intermediate node-related operations in the embodiments in FIG. 1 to FIG. 7 A and FIG. 7B. Therefore, details are not further described to prevent repetition.

Optionally, as an embodiment, the determining module 802 may be specifically configured to: when the protection path resource of the intermediate node is idle, determine that the protection path resource of the intermediate node is available; or specifically configured to: when a priority of the first protection path is higher than a priority of a second protection path, determine that the protection path resource of the intermediate node is available, where the second protection path includes a third end node, a fourth end node, and at least one intermediate node, and the intermediate node has established a cross-connection of the second protection path on the intermediate node or the intermediate node receives a protection switching request message of the second protection path. Further, when the priority of the first protection path is higher than the priority of the second protection path and the intermediate node has established the cross-connection of the second protection path on the intermediate node, the determining module 802 may be further configured to remove the current cross-connection of the second protection path on the intermediate node so that the protection path resource of the intermediate node is idle.

Optionally, a priority level of a protection path may be determined according to a service type, for example, a priority of service data that needs to be transmitted on the first protection path is higher than a priority of service data that needs to be transmitted on the second protection path; or a priority level of a protection path may be determined according to a fault type (for example, SF or SD) of a working path, for example, a priority of a fault type of a working path corresponding to the first protection path is higher than a priority of a fault type of a working path corresponding to the second protection path, and the like.

The second protection path includes the third end node, the fourth end node, and the at least one intermediate node, and the intermediate node on the first protection path may also be a node on the second protection path. It should be understood that the node on the second protection path may be an intermediate node on the second protection path or an end node on the second protection path, which is not limited in the present invention.

Optionally, as another embodiment, the determining module 802 may be specifically configured to determine, according to the information about the first protection path and configuration information of the intermediate node, that the protection path resource of the intermediate node is available. The configuration information of the intermediate node includes an identifier of at least one protection path, a priority of the at least one protection path, and information about a protection path resource of the at least one protection path, and the at least one protection path includes the first protection path. The configuration information of the intermediate node may be preset on a corresponding intermediate node. Further, the determining module 802 may be further configured to change the configuration information of the intermediate node.

Optionally, as another embodiment, the sending module 803 may be specifically configured to send the protection switching request message to the downstream neighboring node of the intermediate node by using an overhead byte on an optical network, and send the first indication message to the upstream neighboring node by using an overhead byte on the optical network. Specifically, an overhead byte on an OTN or SDH network may be used, or an APS overhead byte or another reserved overhead byte that is not defined for use in a standard may be used.

FIG. 9 is a structural block diagram of an intermediate node according to another embodiment of the present invention. An intermediate node 900 in FIG. 9 includes a receiving module 901, a determining module 902, and a sending module 903.

The receiving module 901 is configured to receive a protection switching request message sent by an upstream neighboring node of the intermediate node, where the protection switching request message includes information about a first protection path, the first protection path includes a first end node, a second end node, and at least one intermediate node, the at least one intermediate node is located between the first end node and the second end node, and the intermediate node is one of the at least one intermediate node.

The determining module 902 is configured to determine, according to the information that is of the first protection path and received by the receiving module 901, that a protection path resource of the intermediate node is available.

The sending module 903 is configured to: when the determining module 902 determines that the protection path resource of the intermediate node is available and the intermediate node has established a cross-connection of the first protection path on the intermediate node, send the protection switching request message to a downstream neighboring node of the intermediate node.

The receiving module 901 is further configured to receive a second indication message that is sent by the downstream neighboring node of the intermediate node according to the protection switching request message sent by the sending module 903.

The determining module 902 is further configured to learn, according to the second indication message received by the receiving module 901, that a protection path resource of the downstream neighboring node of the intermediate node is available.

The sending module 903 is further configured to send a first indication message to the upstream neighboring node of the intermediate node, where the first indication message is used to inform the upstream neighboring node of the intermediate node that the protection path resource of the downstream neighboring node of the intermediate node is available.

In the present invention, the first end node (or the second end node) may be either one of two end nodes of the first protection path, that is, the first end node (or the second end node) may be a source node or a destination node, which is not limited in this embodiment of the present invention. For ease of description, a transmission direction of the protection switching request message is used as a reference direction in the present invention, that is, the intermediate node, the upstream neighboring node of the intermediate node, and the downstream neighboring node of the intermediate node are described in a relative manner.

Protection path resources of a node refer to a protection path resource, of a corresponding protection path, in a link from the node to an upstream neighboring node of the node and a protection path resource, of the corresponding protection path, in a link from the node to a downstream neighboring node of the node. Establishing the cross-connection of the first protection path on the intermediate node refers to establishing a cross-connection, corresponding to the first protection path, between a protection path resource in a link from the node to the upstream neighboring node of the node and a protection path resource in a link from the node to the downstream neighboring node of the node.

It should be understood that there may be one or more protection path resources in a link between nodes, and there may be one or more cross-connections in a node, which are not limited in this embodiment of the present invention. For ease of description, that there is one protection path resource in the link between the nodes is described in this embodiment of the present invention.

In this embodiment of the present invention, when a working path between a first end node and a second end node encounters a fault, an intermediate node receives a protection switching request message sent by an upstream neighboring node of the intermediate node, and when determining that a protection path resource of the intermediate node is available, sends the protection switching request message to a downstream neighboring node of the intermediate node; the intermediate node has established a cross-connection of a first protection path on the intermediate node. The protection path resource may be shared by multiple working paths. After learning, from a second indication message sent by the downstream neighboring node of the intermediate node, that a protection path resource of the downstream neighboring node of the intermediate node is available, the intermediate node sends an indication message indicating that the protection path resource of the downstream neighboring node of the intermediate node is available to the upstream neighboring node of the intermediate node. Therefore, protection switching can be quickly performed while resource usage is improved, thereby improving efficiency and preventing an incorrect connection of a service in a protection switching process.

The intermediate node 900 may implement the intermediate node-related operations in the embodiments in FIG. 1 to FIG. 7 A and FIG. 7B. Therefore, details are not further described to prevent repetition.

Optionally, as an embodiment, the determining module 902 may be specifically configured to: when a priority of the first protection path is higher than a priority of a second protection path, determine that the protection path resource of the intermediate node is available, the intermediate node has established a cross-connection of the second protection path on the intermediate node, and the intermediate node is a shared connection resource of the first protection path and the second protection path. The second protection path includes a third end node, a fourth end node, and at least one intermediate node, and the shared connection resource indicates that protection path resources of links between the intermediate node and two neighboring nodes are the same on the first protection path and the second protection path. The intermediate node on the first protection path is also a node on the second protection path. It should be understood that the node on the second protection path may be an intermediate node on the second protection path or an end node on the second protection path, which is not limited in the present invention.

In this embodiment of the present invention, when a protection path with a higher priority preempts a protection path resource that is shared with a protection path with a lower priority, an intermediate node used as a shared connection resource does not need to repeatedly configure a cross-connection, thereby reducing complexity of an operation on the node, further reducing time of protection switching, and improving efficiency. After learning that a protection path resource of a downstream neighboring node of the intermediate node is available, the intermediate node sends, to an upstream neighboring node of the intermediate node, an indication message indicating that a protection path resource of the intermediate node is available, so as to prevent an incorrect connection of a service in a protection switching process.

Optionally, as another embodiment, the determining module 902 may be specifically configured to determine, according to the information about the first protection path and configuration information of the intermediate node, that the protection path resource of the intermediate node is available. The configuration information of the intermediate node includes an identifier of at least one protection path, a priority of the at least one protection path, and information about a protection path resource of the at least one protection path, and the at least one protection path includes the first protection path. The configuration information of the intermediate node may be preset on a corresponding intermediate node. Further, the determining module 902 may be further configured to change the configuration information of the intermediate node.

Optionally, as another embodiment, the sending module 903 may be specifically configured to send the protection switching request message to the downstream neighboring node of the intermediate node by using an overhead byte on an optical network, or send the first indication message to the upstream neighboring node by using an overhead byte on the optical network. Specifically, an overhead byte on an OTN or SDH network may be used, or an APS overhead byte or another reserved overhead byte that is not defined for use in a standard may be used.

FIG. 10 is a structural block diagram of a first end node according to an embodiment of the present invention. A first end node 1000 in FIG. 10 includes a sending module 1001, a receiving module 1002, and an establishing module 1003.

The sending module 1001 is configured to send a protection switching request message to a downstream neighboring node of the first end node, where the protection switching request message includes information about a first protection path, the first protection path includes the first end node, a second end node, and at least one intermediate node, the at least one intermediate node is located between the first end node and the second end node, and the downstream neighboring node of the first end node is a node of the at least one intermediate node.

The receiving module 1002 is configured to receive an indication message that is sent by the downstream neighboring node of the first end node according to the information that is of the first protection path and sent by the sending module 1001.

The establishing module 1003 is configured to learn, according to the indication message received by the receiving module 1002, that a protection path resource of the downstream neighboring node of the first end node is available, and establish a cross-connection of the first protection path on the first end node.

In the present invention, the first end node (or the second end node) may be either one of two end nodes of the first protection path, that is, the first end node (or the second end node) may be a source node or a destination node, which is not limited in this embodiment of the present invention. For ease of description, a transmission direction of the protection switching request message is used as a reference direction in the present invention, that is, the downstream neighboring node of the first end node is described in a relative manner.

In this embodiment of the present invention, when a working path between a first end node and a second end node encounters a fault, the first end node initiates a protection switching process, sends a protection switching request message to a downstream neighboring node of the first end node, and after receiving a first indication message sent by the downstream neighboring node of the first end node and learning that a protection path resource of the downstream neighboring node of the first end node is available, establishes a cross-connection. Therefore, protection switching can be quickly performed while resource usage is improved, thereby improving efficiency and preventing an incorrect connection of a service in the protection switching process.

The first end node 1000 may implement the first end node-related operations in the embodiments in FIG. 1 to FIG. 7 A and FIG. 7B. Therefore, details are not further described to prevent repetition.

Optionally, as an embodiment, the sending module 1001 may be specifically configured to send the protection switching request message to the downstream neighboring node of the first end node by using an overhead byte on an optical network.

Optionally, as another embodiment, the establishing module 1003 may be further configured to preset configuration information of the first end node. The configuration information of the first end node may include information, such as information about a protection path resource between the first end node and the downstream neighboring node of the first end node, and a priority of the first protection path.

Definitely, the first end node may also be a node on another protection path. For example, the first end node is an intermediate node on a protection path (which is not the first protection path).

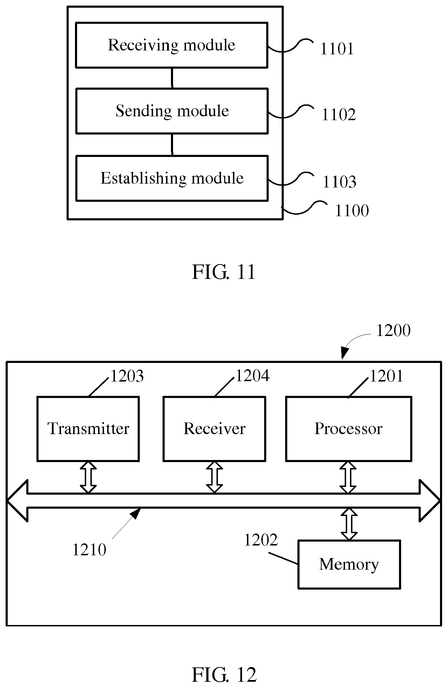

FIG. 11 is a structural block diagram of a second end node according to an embodiment of the present invention. A second end node 1100 in FIG. 11 includes a receiving module 1101, a sending module 1102, and an establishing module 1103.

The receiving module 1101 is configured to receive a protection switching request message sent by an upstream neighboring node of the second end node, where the protection switching request message includes information about a first protection path, the first protection path includes a first end node, the second end node, and at least one intermediate node, the at least one intermediate node is located between the first end node and the second end node, and the upstream neighboring node of the second end node is a node of the at least one intermediate node.

The sending module 1102 is configured to: when it is determined, according to the information that is of the first protection path and received by the receiving module 1101, that a protection path resource of the second end node is available, send an indication message to the upstream neighboring node of the second end node, where the indication message is used to inform the upstream neighboring node of the second end node that the protection path resource of the second end node is available.

The establishing module 1103 is configured to establish a cross-connection of the first protection path on the second end node.

In the present invention, the first end node (or the second end node) may be either one of two end nodes of the first protection path, that is, the first end node (or the second end node) may be a source node or a destination node, which is not limited in this embodiment of the present invention. For ease of description, a transmission direction of the protection switching request message is used as a reference direction in the present invention, that is, a downstream neighboring node of the first end node is described in a relative manner.

In this embodiment of the present invention, when a working path between a first end node and a second end node encounters a fault, the second end node receives a protection switching request message sent by an upstream neighboring node of the second end node, and when determining that a protection path resource of the second end node is available, sends an indication message to the upstream neighboring node of the second end node, so that the upstream neighboring node of the second end node learns, from the indication message, that the protection path resource of the second end node is available. Therefore, protection switching can be quickly performed while resource usage is improved, thereby improving efficiency and preventing an incorrect connection of a service in a protection switching process.

The second end node 1100 may implement the second end node-related steps in the methods in FIG. 1 to FIG. 7 A and FIG. 7B. Therefore, details are not further described to prevent repetition.

Optionally, as an embodiment, the sending module 1102 may be specifically configured to send the indication message to the upstream neighboring node of the second end node by using an overhead byte on an optical network.

Optionally, as another embodiment, the establishing module 1103 may be further configured to preset configuration information of the second end node. The configuration information of the second end node may include information, such as information about a protection path resource between the second end node and the upstream neighboring node of the second end node, and a priority of the first protection path.

The embodiments of the present invention further include an apparatus embodiment for implementing the steps and methods in the foregoing method embodiments. FIG. 12 shows an embodiment of a device. In this embodiment, a device 1200 includes a processor 1201, a memory 1202, a sender 1203, and a receiver 1204. The processor 1201 controls an operation of the device 1200 and the processor 1201 is also called a CPU (Central Processing Unit, central processing unit). The memory 1202 may include a read-only memory and a random access memory, and provide instructions and data for the processor 1201. Apart of the memory 1202 may further include a non-volatile random access memory (NVRAM). The processor 1201, the memory 1202, the sender 1203, and the receiver 1204 are coupled together by using a bus system 1212, where the bus system 1210 not only includes a data bus, but also includes a power supply bus, a control bus, and a status signal bus. However, for clear description, all kinds of buses in the figure are uniformly marked as the bus system 1210.

The methods disclosed in the foregoing embodiments of the present invention may be applied to the foregoing device 1200. The processor 1201 may be an integrated circuit chip having a signal processing capability. In the implementation process, the steps of the foregoing methods may be implemented by an integrated logic circuit of hardware of the processor 1201 or by instructions in a software form.

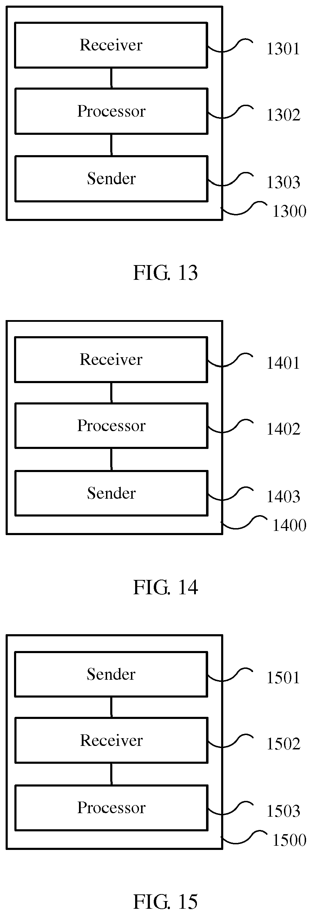

Further, FIG. 13 is a structural block diagram of an intermediate node according to still another embodiment of the present invention. An intermediate node 1300 in FIG. 13 includes a receiver 1301, a processor 1302, and a sender 1303.

The receiver 1301 is configured to receive a protection switching request message sent by an upstream neighboring node of the intermediate node, where the protection switching request message includes information about a first protection path, the first protection path includes a first end node, a second end node, and at least one intermediate node, the at least one intermediate node is located between the first end node and the second end node, and the intermediate node is one of the at least one intermediate node.

The processor 1302 is configured to determine, according to the information that is of the first protection path and received by the receiver 13011, that a protection path resource of the intermediate node is available and that the protection path resource of the intermediate node is idle.

The sender 1303 is configured to: when the processor 1302 determines that the protection path resource of the intermediate node is available, send the protection switching request message to a downstream neighboring node of the intermediate node, and send a first indication message to the upstream neighboring node of the intermediate node, where the first indication message is used to inform the upstream neighboring node of the intermediate node that the protection path resource of the intermediate node is available.

The receiver 1301 is further configured to receive a second indication message that is sent by the downstream neighboring node of the intermediate node according to the protection switching request message sent by the sender 1303.

The processor 1302 is further configured to learn, according to the second indication message received by the receiver 1301, that a protection path resource of the downstream neighboring node of the intermediate node is available, and establish a cross-connection of the first protection path on the intermediate node.

In the present invention, the first end node (or the second end node) may be either one of two end nodes of the first protection path, that is, the first end node (or the second end node) may be a source node or a destination node, which is not limited in this embodiment of the present invention. For ease of description, a transmission direction of the protection switching request message is used as a reference direction in the present invention, that is, the intermediate node, the upstream neighboring node of the intermediate node, and the downstream neighboring node of the intermediate node are described in a relative manner.

Protection path resources of a node refer to a protection path resource, of a corresponding protection path, in a link from the node to an upstream neighboring node of the node and a protection path resource, of the corresponding protection path, in a link from the node to a downstream neighboring node of the node. Establishing the cross-connection of the first protection path on the intermediate node refers to establishing a cross-connection, corresponding to the first protection path, between a protection path resource in a link from the node to the upstream neighboring node of the node and a protection path resource in a link from the node to the downstream neighboring node of the node.

It should be understood that there may be one or more protection path resources in a link between nodes, and there may be one or more cross-connections in a node, which are not limited in this embodiment of the present invention. For ease of description, that there is one protection path resource in the link between the nodes is described in this embodiment of the present invention.

In this embodiment of the present invention, when a working path between a first end node and a second end node encounters a fault, an intermediate node receives a protection switching request message sent by an upstream neighboring node of the intermediate node, and when determining that a protection path resource of the intermediate node is available and that the protection path resource of the intermediate node is idle, sends the protection switching request message to a downstream neighboring node of the intermediate node and sends a first indication message to the upstream neighboring node, so that the upstream and downstream neighboring nodes of the intermediate node can simultaneously perform a protection switching process. The protection path resource may be shared by multiple working paths. The intermediate node establishes a cross-connection of a first protection path after learning, from a second indication message sent by the downstream neighboring node of the intermediate node, that a protection path resource of the downstream neighboring node of the intermediate node is available. Therefore, protection switching can be quickly performed while resource usage is improved, thereby improving efficiency and preventing an incorrect connection of a service in a protection switching process.

The intermediate node 1300 may implement the intermediate node-related operations in the embodiments in FIG. 1 to FIG. 7 A and FIG. 7B. Therefore, details are not further described to prevent repetition.

Optionally, as an embodiment, the processor 1302 may be specifically configured to: when the protection path resource of the intermediate node is idle, determine that the protection path resource of the intermediate node is available; or specifically configured to: when a priority of the first protection path is higher than a priority of a second protection path, determine that the protection path resource of the intermediate node is available, where the second protection path includes a third end node, a fourth end node, and at least one intermediate node, and the intermediate node has established a cross-connection of the second protection path on the intermediate node or the intermediate node receives a protection switching request message of the second protection path. Further, when the priority of the first protection path is higher than the priority of the second protection path and the intermediate node has established the cross-connection of the second protection path on the intermediate node, the processor 1302 may be further configured to remove the current cross-connection of the second protection path on the intermediate node so that the protection path resource of the intermediate node is idle.

Optionally, a priority level of a protection path may be determined according to a service type, for example, a priority of service data that needs to be transmitted on the first protection path is higher than a priority of service data that needs to be transmitted on the second protection path; or a priority level of a protection path may be determined according to a fault type (for example, SF or SD) of a working path, for example, a priority of a fault type of a working path corresponding to the first protection path is higher than a priority of a fault type of a working path corresponding to the second protection path, and the like.

The second protection path includes the third end node, the fourth end node, and the at least one intermediate node, and the intermediate node on the first protection path may also be a node on the second protection path. It should be understood that the node on the second protection path may be an intermediate node on the second protection path or an end node on the second protection path, which is not limited in the present invention.

Optionally, as another embodiment, the processor 1302 may be specifically configured to determine, according to the information about the first protection path and configuration information of the intermediate node, that the protection path resource of the intermediate node is available. The configuration information of the intermediate node includes an identifier of at least one protection path, a priority of the at least one protection path, and information about a protection path resource of the at least one protection path, and the at least one protection path includes the first protection path. The configuration information of the intermediate node may be preset on a corresponding intermediate node. Further, the processor 1302 may be further configured to change the configuration information of the intermediate node.

Optionally, as another embodiment, the sender 1303 may be specifically configured to send the protection switching request message to the downstream neighboring node of the intermediate node by using an overhead byte on an optical network, and send the first indication message to the upstream neighboring node by using an overhead byte on the optical network. Specifically, an overhead byte on an OTN or SDH network may be used, or an APS overhead byte or another reserved overhead byte that is not defined for use in a standard may be used.

FIG. 14 is a structural block diagram of an intermediate node according to yet another embodiment of the present invention. An intermediate node 1400 in FIG. 14 includes a receiver 1401, a processor 1402, and a sender 1403.

The receiver 1401 is configured to receive a protection switching request message sent by an upstream neighboring node of the intermediate node, where the protection switching request message includes information about a first protection path, the first protection path includes a first end node, a second end node, and at least one intermediate node, the at least one intermediate node is located between the first end node and the second end node, and the intermediate node is one of the at least one intermediate node.

The processor 1402 is configured to determine, according to the information that is of the first protection path and received by the receiver 1401, that a protection path resource of the intermediate node is available.

The sender 1403 is configured to: when the processor 1402 determines that the protection path resource of the intermediate node is available and the intermediate node has established a cross-connection of the first protection path on the intermediate node, send the protection switching request message to a downstream neighboring node of the intermediate node.

The receiver 1401 is further configured to receive a second indication message that is sent by the downstream neighboring node of the intermediate node according to the protection switching request message sent by the sender 1403.

The processor 1402 is further configured to learn, according to the second indication message received by the receiver 1401, that a protection path resource of the downstream neighboring node of the intermediate node is available.

The sender 1403 is further configured to send a first indication message to the upstream neighboring node of the intermediate node, where the first indication message is used to inform the upstream neighboring node of the intermediate node that the protection path resource of the downstream neighboring node of the intermediate node is available.

In the present invention, the first end node (or the second end node) may be either one of two end nodes of the first protection path, that is, the first end node (or the second end node) may be a source node or a destination node, which is not limited in this embodiment of the present invention. For ease of description, a transmission direction of the protection switching request message is used as a reference direction in the present invention, that is, the intermediate node, the upstream neighboring node of the intermediate node, and the downstream neighboring node of the intermediate node are described in a relative manner.

Protection path resources of a node refer to a protection path resource, of a corresponding protection path, in a link from the node to an upstream neighboring node of the node and a protection path resource, of the corresponding protection path, in a link from the node to a downstream neighboring node of the node. Establishing the cross-connection of the first protection path on the intermediate node refers to establishing a cross-connection, corresponding to the first protection path, between a protection path resource in a link from the node to the upstream neighboring node of the node and a protection path resource in a link from the node to the downstream neighboring node of the node.

It should be understood that there may be one or more protection path resources in a link between nodes, and there may be one or more cross-connections in a node, which are not limited in this embodiment of the present invention. For ease of description, that there is one protection path resource in the link between the nodes is described in this embodiment of the present invention.

In this embodiment of the present invention, when a working path between a first end node and a second end node encounters a fault, an intermediate node receives a protection switching request message sent by an upstream neighboring node of the intermediate node, and when determining that a protection path resource of the intermediate node is available, sends the protection switching request message to a downstream neighboring node of the intermediate node; the intermediate node has established a cross-connection of a first protection path on the intermediate node. The protection path resource may be shared by multiple working paths. After learning, from a second indication message sent by the downstream neighboring node of the intermediate node, that a protection path resource of the downstream neighboring node of the intermediate node is available, the intermediate node sends an indication message indicating that the protection path resource of the downstream neighboring node of the intermediate node is available to the upstream neighboring node of the intermediate node. Therefore, protection switching can be quickly performed while resource usage is improved, thereby improving efficiency and preventing an incorrect connection of a service in a protection switching process.

The intermediate node 1400 may implement the intermediate node-related operations in the embodiments in FIG. 1 to FIG. 7 A and FIG. 7B. Therefore, details are not further described to prevent repetition.

Optionally, as an embodiment, the processor 1402 may be specifically configured to: when a priority of the first protection path is higher than a priority of a second protection path, determine that the protection path resource of the intermediate node is available, the intermediate node has established a cross-connection of the second protection path on the intermediate node, and the intermediate node is a shared connection resource of the first protection path and the second protection path. The second protection path includes a third end node, a fourth end node, and at least one intermediate node, and the shared connection resource indicates that protection path resources of links between the intermediate node and two neighboring nodes are the same on the first protection path and the second protection path. The intermediate node on the first protection path is also a node on the second protection path. It should be understood that the node on the second protection path may be an intermediate node on the second protection path or an end node on the second protection path, which is not limited in the present invention.

In this embodiment of the present invention, when a protection path with a higher priority preempts a protection path resource that is shared with a protection path with a lower priority, an intermediate node used as a shared connection resource does not need to repeatedly configure a cross-connection, thereby reducing complexity of an operation on the node, further reducing time of protection switching, and improving efficiency. After learning that a protection path resource of a downstream neighboring node of the intermediate node is available, the intermediate node sends, to an upstream neighboring node of the intermediate node, an indication message indicating that a protection path resource of the intermediate node is available, so as to prevent an incorrect connection of a service in a protection switching process.

Optionally, as another embodiment, the processor 1402 may be specifically configured to determine, according to the information about the first protection path and configuration information of the intermediate node, that the protection path resource of the intermediate node is available. The configuration information of the intermediate node includes an identifier of at least one protection path, a priority of the at least one protection path, and information about a protection path resource of the at least one protection path, and the at least one protection path includes the first protection path. The configuration information of the intermediate node may be preset on a corresponding intermediate node. Further, the processor 1402 may be further configured to change the configuration information of the intermediate node.

Optionally, as another embodiment, the sender 1403 may be specifically configured to send the protection switching request message to the downstream neighboring node of the intermediate node by using an overhead byte on an optical network, or send the first indication message to the upstream neighboring node by using an overhead byte on the optical network. Specifically, an overhead byte on an OTN or SDH network may be used, or an APS overhead byte or another reserved overhead byte that is not defined for use in a standard may be used.

FIG. 15 is a structural block diagram of a first end node according to another embodiment of the present invention. A first end node 1500 in FIG. 10 includes a sender 1501, a receiver 1502, and a processor 1503.

The sender 1501 is configured to send a protection switching request message to a downstream neighboring node of the first end node, where the protection switching request message includes information about a first protection path, the first protection path includes the first end node, a second end node, and at least one intermediate node, the at least one intermediate node is located between the first end node and the second end node, and the downstream neighboring node of the first end node is a node of the at least one intermediate node.

The receiver 1502 is configured to receive an indication message that is sent by the downstream neighboring node of the first end node according to the information that is of the first protection path and sent by the sender 1501.

The processor 1503 is configured to learn, according to the indication message received by the receiver 1502, that a protection path resource of the downstream neighboring node of the first end node is available, and establish a cross-connection of the first protection path on the first end node.

In the present invention, the first end node (or the second end node) may be either one of two end nodes of the first protection path, that is, the first end node (or the second end node) may be a source node or a destination node, which is not limited in this embodiment of the present invention. For ease of description, a transmission direction of the protection switching request message is used as a reference direction in the present invention, that is, the downstream neighboring node of the first end node is described in a relative manner.

In this embodiment of the present invention, when a working path between a first end node and a second end node encounters a fault, the first end node initiates a protection switching process, sends a protection switching request message to a downstream neighboring node of the first end node, and after receiving a first indication message sent by the downstream neighboring node of the first end node and learning that a protection path resource of the downstream neighboring node of the first end node is available, establishes a cross-connection. Therefore, protection switching can be quickly performed while resource usage is improved, thereby improving efficiency and preventing an incorrect connection of a service in the protection switching process.

The first end node 1500 may implement the first end node-related operations in the embodiments in FIG. 1 to FIG. 7 A and FIG. 7B. Therefore, details are not further described to prevent repetition.

Optionally, as an embodiment, the sender 1501 may be specifically configured to send the protection switching request message to the downstream neighboring node of the first end node by using an overhead byte on an optical network.

Optionally, as another embodiment, the processor 1503 may be further configured to preset configuration information of the first end node. The configuration information of the first end node may include information, such as information about a protection path resource between the first end node and the downstream neighboring node of the first end node, and a priority of the first protection path.

Definitely, the first end node may also be a node on another protection path. For example, the first end node is an intermediate node on a protection path (which is not the first protection path).

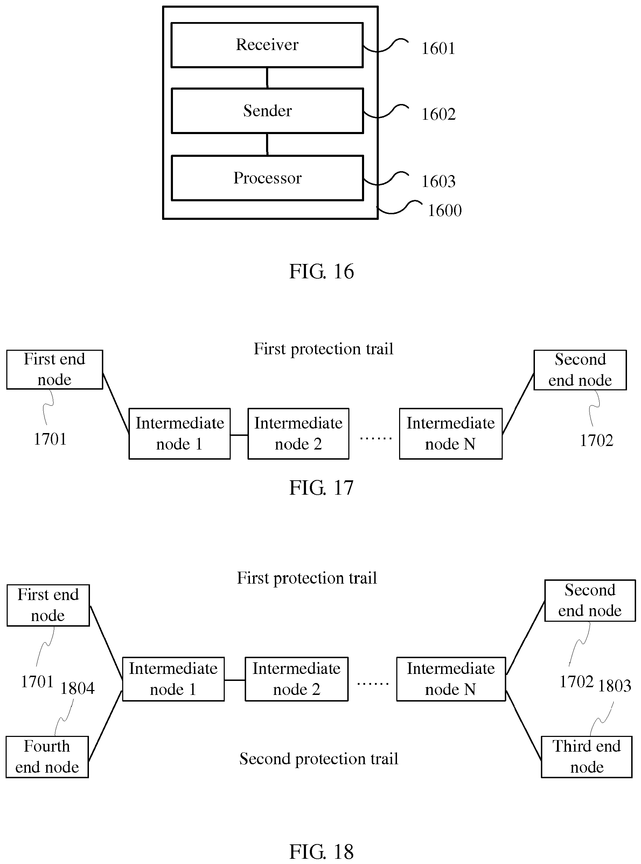

FIG. 16 is a structural block diagram of a second end node according to another embodiment of the present invention. A second end node 1600 in FIG. 16 includes a receiver 1601, a sender 1602, and a processor 1603.

The receiver 1601 is configured to receive a protection switching request message sent by an upstream neighboring node of the second end node, where the protection switching request message includes information about a first protection path, the first protection path includes a first end node, the second end node, and at least one intermediate node, the at least one intermediate node is located between the first end node and the second end node, and the upstream neighboring node of the second end node is a node of the at least one intermediate node.

The sender 1602 is configured to: when it is determined, according to the information that is of the first protection path and received by the receiver 1601, that a protection path resource of the second end node is available, send an indication message to the upstream neighboring node of the second end node, where the indication message is used to inform the upstream neighboring node of the second end node that the protection path resource of the second end node is available.

The processor 1603 is configured to establish a cross-connection of the first protection path on the second end node.

In the present invention, the first end node (or the second end node) may be either one of two end nodes of the first protection path, that is, the first end node (or the second end node) may be a source node or a destination node, which is not limited in this embodiment of the present invention. For ease of description, a transmission direction of the protection switching request message is used as a reference direction in the present invention, that is, a downstream neighboring node of the first end node is described in a relative manner.

In this embodiment of the present invention, when a working path between a first end node and a second end node encounters a fault, the second end node receives a protection switching request message sent by an upstream neighboring node of the second end node, and when determining that a protection path resource of the second end node is available, sends an indication message to the upstream neighboring node of the second end node, so that the upstream neighboring node of the second end node learns, from the indication message, that the protection path resource of the second end node is available. Therefore, protection switching can be quickly performed while resource usage is improved, thereby improving efficiency and preventing an incorrect connection of a service in a protection switching process.

The second end node 1600 may implement the second end node-related steps in the methods in FIG. 1 to FIG. 7 A and FIG. 7B. Therefore, details are not further described to prevent repetition.

Optionally, as an embodiment, the sender 1602 may be specifically configured to send the indication message to the upstream neighboring node of the second end node by using an overhead byte on an optical network.

Optionally, as another embodiment, the processor 1603 may be further configured to preset configuration information of the second end node. The configuration information of the second end node may include information, such as information about a protection path resource between the second end node and the upstream neighboring node of the second end node, and a priority of the first protection path.

FIG. 17 is a schematic block diagram of a protection switching system according to an embodiment of the present invention. The protection switching system in FIG. 17 may include one first end node 1701 (the foregoing first end node 1000/1500), one second end node 1702 (the foregoing first end node 1100/1600), and at least one intermediate node (the foregoing intermediate node 800 and/or 900, or the foregoing intermediate node 1300 and/or 1400), that is, N intermediate nodes, where N is a positive integer, and the N intermediate nodes are an intermediate node 1, an intermediate node 2, ..., and an intermediate node N respectively. It should be understood that the number of intermediate nodes is not limited in this embodiment of the present invention, and there may be one or more intermediate nodes. In the present invention, the first end node may be either one of two end nodes of a first protection path, that is, the first end node may be a source node or a destination node, which is not limited in this embodiment of the present invention.

Exemplarily, a system 1700 may further include a third end node 1803 and a fourth end node 1804. As shown in FIG. 18, a second protection path includes the third end node 1803, the fourth end node 1804, and N intermediate nodes.

It should be understood that the system in FIG. 18 is merely exemplary, the number of intermediate nodes on a first protection path may be the same as or different from the number of intermediate nodes on the second protection path, and an intermediate node on the first protection path may further be an end node on the second protection path, and so on, which is not limited in the embodiment of the present invention.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication paths may be implemented through some interfaces. The indirect couplings or communication paths between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The software product is stored in a storage medium, and includes several instructions for instructing a computer device (which may be a personal computer, a server, or a network device) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. The protection scope of the present invention shall be subject to the protection scope of the claims.

## Claims

1. A protection switching method, comprising:
receiving (101), by an intermediate node, a protection switching request message from an upstream adjacent node, wherein the protection switching request message comprises an identifier of a first protection path;
determining (102), by the intermediate node, resource of the first protection path is available;
sending, by the intermediate node, a first indication message to the upstream adjacent node, and sending the protection switching request message to a downstream adjacent node, wherein the first indication message indicating that the resource of the first protection path of the intermediate node is available; and
receiving (103), by the intermediate node, a second indication message from the downstream adjacent node, and setting up a cross-connection for the first protection path, wherein the second indication message indicating that the resource of the first protection path of the downstream adjacent node is available.

2. The method according to claim 1, wherein the determining that resource of the first protection path is available comprises:
determining, according to the identifier of the first protection path, that the resource of the first protection path is available.

3. The method according to claim 1 or 2, wherein the determining that the resource of the first protection path is available comprises:
when the resource is idle, determining that the resource of the first protection path is available; or
when the resource is in used by a lower priority protection path than the first protection path, determining that the resource of the first protection path is available.

4. The method according to claim 3, when the resource is in used by a lower priority protection path than the first protection path, the method further comprises:
removing, by the intermediate node, the lower priority protection path on the intermediate node.

5. A protection switching method, comprising:
sending (301), by an end node, a protection switching request message to a downstream adjacent node, wherein the protection switching request message comprises an identifier of a first protection path;
receiving (302), by the end node, an indication message from the downstream adjacent node, wherein the indication message indicating that resource of the first protection path is available; and
setting up (303), by the end node, a cross-connection for the first protection path.

6. The method according to claim 5, wherein the indication message is generated based on that the resource of the first protection path on the downstream adjacent node is available.

7. A protection switching method, comprising:
receiving (401) , by an end node, a protection switching request message from an upstream adjacent node, wherein the protection switching request message comprises an identifier of a first protection path;
determining (402), by the end node, that resource of the first protection path is available;
setting up, by the end node, a cross-connection for the first protection path; and
sending, by the end node, an indication message to the upstream adjacent node, wherein the indication message indicating that the resource of the first protection path is available.

8. The method according to claim 7, wherein the determining that resource of the first protection path is available comprises:
determining, according to the identifier of the first protection path, that the resource of the first protection path is available.

9. An intermediate node, comprising:
a receiving module (801), configured to receive a protection switching request message from an upstream adjacent node, wherein the protection switching request message comprises an identifier of a first protection path;
a determining module (802), configured to determine resource of the first protection path is available; and
a sending module (803), configured to send a first indication message to the upstream adjacent node, and send the protection switching request message to a downstream adjacent node, wherein the first indication message indicating that the resource of the first protection path of the intermediate node is available;
wherein the receiving module is configured to receive a second indication message from the downstream adjacent node , wherein the second indication message indicating that the resource of the first protection path of the downstream adjacent node is available;
wherein the determining module is configured to set up a cross-connection for the first protection path.

10. The intermediate node according to claim 9, wherein determining module is configured to determine, according to the identifier of the first protection path, that the resource of the first protection path is available.

11. The intermediate node according to claim 9 or 10, wherein determining module is configured to:
when the resource is idle, determine that the resource of the first protection path is available; or
when the resource is in used by a lower priority protection path than the first protection path, determine that the resource of the first protection path is available.

12. The intermediate node according to claim 11, wherein the determining module is further configured to:
remove the lower priority protection path on the intermediate node.

13. An end node, comprising:
a sending module (1001), configured to send a protection switching request message to a downstream adjacent node, wherein the protection switching request message comprises an identifier of a first protection path;
a receiving module (1002), configured to receive an indication message from the downstream adjacent node; and
a setting up module (1003), configured to set up a cross-connection for the first protection path, wherein the indication message indicating that resource of the first protection path is available.

14. The end node according to claim 13, wherein the indication message is generated based on that the resource of the first protection path on the downstream adjacent node is available.

15. An end node, comprising:
a receiving module (1101), configured to receive a protection switching request message from an upstream adjacent node, wherein the protection switching request message comprises an identifier of a first protection path;
a determining module (1103), configured to determine that that resource of the first protection path is available, and set up a cross-connection for the first protection path; and
a sending module (1102), configured to send an indication message to the upstream adjacent node, wherein the indication message indicating that the resource of the first protection path is available.

## Patentansprüche

1. Schutzschaltverfahren, umfassend:
Empfangen (101), durch einen Zwischenknoten, einer Schutzschaltanforderungsnachricht von einem vorgelagerten benachbarten Knoten, wobei die Schutzschaltanforderungsnachricht eine Kennung eines ersten Schutzpfads umfasst;
Bestimmen (102), durch den Zwischenknoten, dass eine Ressource des ersten Schutzpfads verfügbar ist;
Senden, durch den Zwischenknoten, einer ersten Angabenachricht an den vorgelagerten benachbarten Knoten und Senden der Schutzschaltanforderungsnachricht an einen nachgelagerten benachbarten Knoten, wobei die erste Angabenachricht angibt, dass die Ressource des ersten Schutzpfads des Zwischenknotens verfügbar ist; und
Empfangen (103), durch den Zwischenknoten, einer zweiten Angabenachricht von dem nachgelagerten benachbarten Knoten und Einrichten einer Kreuzverbindung für den ersten Schutzpfad, wobei die zweite Angabenachricht angibt, dass die Ressource des ersten Schutzpfads des nachgelagerten benachbarten Knotens verfügbar ist.

2. Verfahren nach Anspruch 1, wobei das Bestimmen, dass die Ressource des ersten Schutzpfads verfügbar ist, Folgendes umfasst:
Bestimmen, gemäß der Kennung des ersten Schutzpfads, dass die Ressource des ersten Schutzpfads verfügbar ist.

3. Verfahren nach Anspruch 1 oder 2, wobei das Bestimmen, dass die Ressource des ersten Schutzpfads verfügbar ist, Folgendes umfasst:
wenn die Ressource ungenutzt ist, Bestimmen, dass die Ressource des ersten Schutzpfads verfügbar ist; oder,
wenn die Ressource durch einen Schutzpfad mit niedrigerer Priorität als der erste Schutzpfad verwendet wird, Bestimmen, dass die Ressource des ersten Schutzpfads verfügbar ist.

4. Verfahren nach Anspruch 3, wobei das Verfahren, wenn die Ressource durch einen Schutzpfad mit niedrigerer Priorität als der erste Schutzpfad verwendet wird, ferner Folgendes umfasst:
Beseitigen, durch den Zwischenknoten, des Schutzpfads mit niedrigerer Priorität an dem Zwischenknoten.

5. Schutzschaltverfahren, umfassend:
Senden (301), durch einen Endknoten, einer Schutzschaltanforderungsnachricht an einen nachgelagerten benachbarten Knoten, wobei die Schutzschaltanforderungsnachricht eine Kennung eines ersten Schutzpfads umfasst;
Empfangen (302), durch den Endknoten, einer Angabenachricht von dem nachgelagerten benachbarten Knoten, wobei die Angabenachricht angibt, dass die Ressource des ersten Schutzpfads verfügbar ist; und
Einrichten (303), durch den Endknoten, einer Kreuzverbindung für den ersten Schutzpfad.

6. Verfahren nach Anspruch 5, wobei die Angabenachricht basierend darauf erzeugt wird, dass die Ressource des ersten Schutzpfads an dem nachgelagerten benachbarten Knoten verfügbar ist.

7. Schutzschaltverfahren, umfassend:
Empfangen (401), durch einen Endknoten, einer Schutzschaltanforderungsnachricht von einem vorgelagerten benachbarten Knoten, wobei die Schutzschaltanforderungsnachricht eine Kennung eines ersten Schutzpfads umfasst;
Bestimmen (402), durch den Endknoten, dass eine Ressource des ersten Schutzpfads verfügbar ist;
Einrichten, durch den Endknoten, einer Kreuzverbindung für den ersten Schutzpfad; und
Senden, durch den Endknoten, einer Angabenachricht an den vorgelagerten benachbarten Knoten, wobei die Angabenachricht angibt, dass die Ressource des ersten Schutzpfads verfügbar ist.

8. Verfahren nach Anspruch 7, wobei das Bestimmen, dass die Ressource des ersten Schutzpfads verfügbar ist, Folgendes umfasst:
Bestimmen, gemäß der Kennung des ersten Schutzpfads, dass die Ressource des ersten Schutzpfads verfügbar ist.

9. Zwischenknoten, umfassend:
ein Empfangsmodul (801), ausgelegt zum Empfangen einer Schutzschaltanforderungsnachricht von einem vorgelagerten benachbarten Knoten, wobei die Schutzschaltanforderungsnachricht eine Kennung eines ersten Schutzpfads umfasst;
ein Bestimmungsmodul (802), ausgelegt zum Bestimmen, dass eine Ressource des ersten Schutzpfads verfügbar ist; und
ein Sendemodul (803), ausgelegt zum Senden einer ersten Angabenachricht an den vorgelagerten benachbarten Knoten und Senden der Schutzschaltanforderungsnachricht an einen nachgelagerten benachbarten Knoten, wobei die erste Angabenachricht angibt, dass die Ressource des ersten Schutzpfads des Zwischenknotens verfügbar ist;
wobei das Empfangsmodul ausgelegt ist zum Empfangen einer zweiten Angabenachricht von dem nachgelagerten benachbarten Knoten, wobei die zweite Angabenachricht angibt, dass die Ressource des ersten Schutzpfads des nachgelagerten benachbarten Knotens verfügbar ist;
wobei das Bestimmungsmodul ausgelegt ist zum Einrichten einer Kreuzverbindung für den ersten Schutzpfad.

10. Zwischenknoten nach Anspruch 9, wobei das Bestimmungsmodul ausgelegt ist zum Bestimmen, gemäß der Kennung des ersten Schutzpfads, dass die Ressource des ersten Schutzpfads verfügbar ist.

11. Zwischenknoten nach Anspruch 9 oder 10, wobei das Bestimmungsmodul zu Folgendem ausgelegt ist:
wenn die Ressource ungenutzt ist, Bestimmen, dass die Ressource des ersten Schutzpfads verfügbar ist; oder,
wenn die Ressource durch einen Schutzpfad mit niedrigerer Priorität als der erste Schutzpfad verwendet wird, Bestimmen, dass die Ressource des ersten Schutzpfads verfügbar ist.

12. Zwischenknoten nach Anspruch 11, wobei das Bestimmungsmodul ferner zu Folgendem ausgelegt ist:
Beseitigen des Schutzpfads mit niedrigerer Priorität an dem Zwischenknoten.

13. Endknoten, umfassend:
ein Sendemodul (1001), ausgelegt zum Senden einer Schutzschaltanforderungsnachricht an einen nachgelagerten benachbarten Knoten, wobei die Schutzschaltanforderungsnachricht eine Kennung eines ersten Schutzpfads umfasst;
ein Empfangsmodul (1002), ausgelegt zum Empfangen einer Angabenachricht von dem nachgelagerten benachbarten Knoten; und
ein Einrichtungsmodul (1003), ausgelegt zum Einrichten einer Kreuzverbindung für den ersten Schutzpfad, wobei die Angabenachricht angibt, dass die Ressource des ersten Schutzpfads verfügbar ist.

14. Endknoten nach Anspruch 13, wobei die Angabenachricht basierend darauf erzeugt wird, dass die Ressource des ersten Schutzpfads an dem nachgelagerten benachbarten Knoten verfügbar ist.

15. Endknoten, umfassend:
ein Empfangsmodul (1101), ausgelegt zum Empfangen einer Schutzschaltanforderungsnachricht von einem vorgelagerten benachbarten Knoten, wobei die Schutzschaltanforderungsnachricht eine Kennung eines ersten Schutzpfads umfasst;
ein Bestimmungsmodul (1103), ausgelegt zum Bestimmen, dass eine Ressource des ersten Schutzpfads verfügbar ist, und Einrichten einer Kreuzverbindung für den ersten Schutzpfad; und
ein Sendemodul (1102), ausgelegt zum Senden einer Angabenachricht an den vorgelagerten benachbarten Knoten, wobei die Angabenachricht angibt, dass die Ressource des ersten Schutzpfads verfügbar ist.

## Revendications

1. Procédé de commutation de protection, comprenant les étapes consistant à :
recevoir (101), par un noeud intermédiaire, un message de demande de commutation de protection en provenance d'un noeud adjacent en amont, le message de demande de commutation de protection comprenant un identifiant d'un premier chemin de protection ;
déterminer (102), par le noeud intermédiaire, qu'une ressource du premier chemin de protection est disponible ;
envoyer, parle noeud intermédiaire, un premier message d'indication au noeud adjacent en amont et envoyer le message de demande de commutation de protection à un noeud adjacent en aval, le premier message d'indication indiquant que la ressource du premier chemin de protection du noeud intermédiaire est disponible ; et
recevoir (103), par le noeud intermédiaire, un second message d'indication en provenance du noeud adjacent en aval et établir une connexion croisée pour le premier chemin de protection, le second message d'indication indiquant que la ressource du premier chemin de protection du noeud adjacent en aval est disponible.

2. Procédé selon la revendication 1, dans lequel la détermination du fait qu'une ressource du premier chemin de protection est disponible comprend l'étape consistant à :
déterminer, selon l'identifiant du premier chemin de protection, que la ressource du premier chemin de protection est disponible.

3. Procédé selon la revendication 1 ou 2, dans lequel la détermination du fait que la ressource du premier chemin de protection est disponible comprend l'étape consistant à :
lorsque la ressource est inactive, déterminer que la ressource du premier chemin de protection est disponible ; ou
lorsque la ressource est en cours d'utilisation par un chemin de protection dont la priorité est inférieure à celle du premier chemin de protection, déterminer que la ressource du premier chemin de protection est disponible.

4. Procédé selon la revendication 3, le procédé comprenant en outre, lorsque la ressource est en cours d'utilisation par un chemin de protection dont la priorité est inférieure à celle du premier chemin de protection, l'étape consistant à :
supprimer, par le noeud intermédiaire, le chemin de protection à priorité inférieure sur le noeud intermédiaire.

5. Procédé de commutation de protection, comprenant les étapes consistant à :
envoyer (301), par un noeud d'extrémité, un message de demande de commutation de protection à un noeud adjacent en aval, le message de demande de commutation de protection comprenant un identifiant d'un premier chemin de protection ;
recevoir (302), par le noeud d'extrémité, un message d'indication en provenance du noeud adjacent en aval, le message d'indication indiquant qu'une ressource du premier chemin de protection est disponible ; et
établir (303), par le noeud d'extrémité, une connexion croisée pour le premier chemin de protection.

6. Procédé selon la revendication 5, dans lequel le message d'indication est généré sur la base du fait que la ressource du premier chemin de protection sur le noeud adjacent en aval n'est pas disponible.

7. Procédé de commutation de protection, comprenant les étapes consistant à :
recevoir (401), par un noeud d'extrémité, un message de demande de commutation de protection en provenance d'un noeud adjacent en amont, le message de demande de commutation de protection comprenant un identifiant d'un premier chemin de protection ;
déterminer (402), par le noeud d'extrémité, qu'une ressource du premier chemin de protection est disponible ;
établir, par le noeud d'extrémité, une connexion croisée pour le premier chemin de protection ; et
envoyer, par le noeud d'extrémité, un message d'indication au noeud adjacent en amont, le message d'indication indiquant que la ressource du premier chemin de protection est disponible.

8. Procédé selon la revendication 7, dans lequel la détermination du fait qu'une ressource du premier chemin de protection est disponible comprend l'étape consistant à :
déterminer, selon l'identifiant du premier chemin de protection, que la ressource du premier chemin de protection est disponible.

9. Noeud intermédiaire, comprenant :
un module de réception (801), configuré pour recevoir un message de demande de commutation de protection en provenance d'un noeud adjacent en amont, le message de demande de commutation de protection comprenant un identifiant d'un premier chemin de protection ;
un module de détermination (802), configuré pour déterminer qu'une ressource du premier chemin de protection est disponible ; et
un module d'envoi (803), configuré pour envoyer un premier message d'indication au noeud adjacent en amont et envoyer le message de demande de commutation de protection à un noeud adjacent en aval, le premier message d'indication indiquant que la ressource du premier chemin de protection du noeud intermédiaire est disponible ;
le module de réception étant configuré pour recevoir un second message d'indication en provenance du noeud adjacent en aval, le second message d'indication indiquant que la ressource du premier chemin de protection du noeud adjacent en aval est disponible ;
le module de détermination étant configuré pour établir une connexion croisée pour le premier chemin de protection.

10. Noeud intermédiaire selon la revendication 9, dans lequel le module de détermination est configuré pour déterminer, selon l'identifiant du premier chemin de protection, que la ressource du premier chemin de protection est disponible.

11. Noeud intermédiaire selon la revendication 9 ou 10, dans lequel le module de détermination est configuré pour :
lorsque la ressource est inactive, déterminer que la ressource du premier chemin de protection est disponible ; ou
lorsque la ressource est en cours d'utilisation par un chemin de protection dont la priorité est inférieure à celle du premier chemin de protection, déterminer que la ressource du premier chemin de protection est disponible.

12. Noeud intermédiaire selon la revendication 11, dans lequel le module de détermination est en outre configuré pour :
supprimer le chemin de protection à priorité inférieure sur le noeud intermédiaire.

13. Noeud d'extrémité, comprenant :
un module d'envoi (1001), configuré pour envoyer un message de demande de commutation de protection à un noeud adjacent en aval, le message de demande de commutation de protection comprenant un identifiant d'un premier chemin de protection ;
un module de réception (1002), configuré pour recevoir un message d'indication en provenance du noeud adjacent en aval ; et
un module d'établissement (1003), configuré pour établir une connexion croisée pour le premier chemin de protection, le message d'indication indiquant qu'une ressource du premier chemin de protection est disponible.

14. Noeud d'extrémité selon la revendication 13, dans lequel le message d'indication est généré sur la base du fait que la ressource du premier chemin de protection sur le noeud adjacent en aval n'est pas disponible.

15. Noeud d'extrémité, comprenant :
un module de réception (1101), configuré pour recevoir un message de demande de commutation de protection en provenance d'un noeud adjacent en amont, le message de demande de commutation de protection comprenant un identifiant d'un premier chemin de protection ;
un module de détermination (1103), configuré pour déterminer qu'une ressource du premier chemin de protection est disponible et établir une connexion croisée pour le premier chemin de protection ; et
un module d'envoi (1102), configuré pour envoyer un message d'indication au noeud adjacent en amont, le message d'indication indiquant que la ressource du premier chemin de protection est disponible.
